# EUROPEAN PATENT SPECIFICATION

(11) **EP 2 352 990 B1**
(45) Date of publication and mention of the grant of the patent: **30.12.2020**
(21) Application number: 09824906.3
(22) Date of filing: 05.11.2009
(51) Int. Cl.: G01N 21/64, G01N 21/77

(54) **METHOD FOR SENSING A BIOCHEMICAL AND/OR BIOMECHANICAL PROCESS OF A LIVE BIOLOGICAL CELL**
VERFAHREN ZUR MESSUNG EINES BIOCHEMISCHEN UND/ODER BIOMECHANISCHEN PROZESSES EINER LEBENDEN BIOLOGISCHEN ZELLE
MÉTHODE DE DÉTECTION D'UN PROCÉDÉ BIOCHIMIQUE ET/OU BIOMÉCANIQUE D'UNE CELLULE BIOLOGIQUE VIVANTE

(30) Priority: 05.11.2008 US 111369 P
(43) Date of publication of application: 10.08.2011
(73) Proprietor: Himmelhaus, Michael, 12489 Berlin (DE)
(72) Inventor: HIMMELHAUS, Michael, 12489 Berlin (DE); FRANCOIS, Alexandre, Para Hills, SA 5096 (AU)
(86) International application number: PCT/JP2009/069236
(87) International publication number: WO 2010/053209

(56) References cited:
- WO-A1-2007/129682
- WO-A2-2007/075444
- JP-T- 2003 515 737
- JP-T- 2004 515 764
- JP-T- 2004 530 867
- JP-T- 2008 500 534
- US-A1- 2006 148 104

## Description

### Technical Field

The present invention relates to a method for sensing a biochemical and/or biomechanical process of a live biological cell in vitro.

### Background Art

Optical cavity mode sensors have been disclosed in the following references.

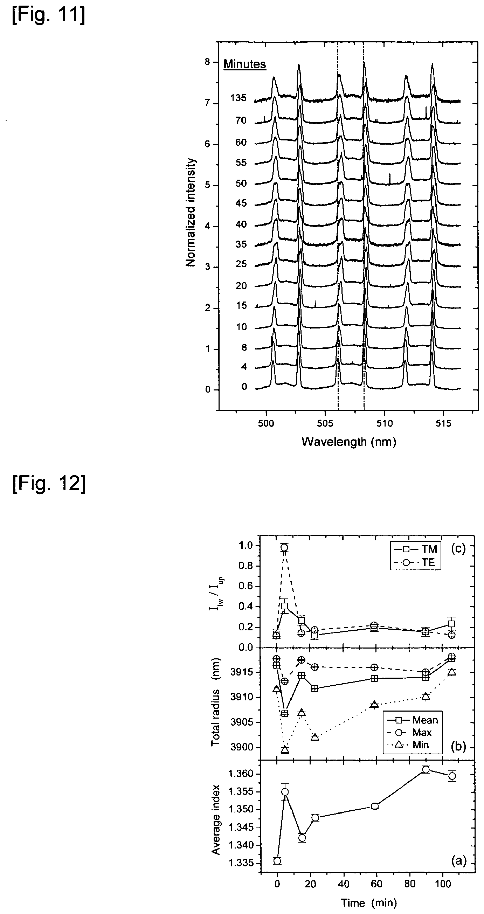

Zijlstra et al. (P. Zijlstra et al., Appl. Phys. Lett. Vol. 90, pp. 161101/1-3, 2007) and Pang et al. (S. Pang et al., Appl. Phys. Lett. Vol. 92, pp. 221108/1-3, 2008) describe the use of fluorescent PS beads as refractometric sensors in liquid environment. While the remote capability of the sensors is pointed out, their application to sensing in vicinity or even inside of cells is not mentioned anywhere. With particle sizes of 10 µm and above, the beads used in these two studies are typically too large for their incorporation into (live) cells (see, e.g., Fig. 5(C) right, in M. Herant et al., J. Cell Sci. Vol. 118, pp. 1789-1797, 2005 and Fig. 11 of the present application which will hereinafter be described in detail).

WO2005116615 describes the utilization of whispering gallery modes in spherical particles decorated with fluorescent semiconductor quantum dots for biosensing. Internalization of these sensors into cells is not mentioned.

Weller et al. (A. Weller et al., Appl. Phys. B, Vol. 90, pp. 561-567, 2008) report on biosensing by means of fluorescent PS particles of few microns in diameter. However, the study reports only about sensing under ex-situ conditions. While the potential of in-vitro sensing is mentioned, sensing inside of cells is not discussed at all.

Francois & Himmelhaus (A. Francois & M. Himmelhaus, Appl. Phys. Lett., Vol. 92, pp. 141107/1-3, 2008) utilized whispering gallery mode (WGM) excitations in clusters of microresonators for in-situ bio-sensing in an aqueous environment. The clusters are surface-bound and thus not capable of migrating into cells. The concept of intracellular sensing is not mentioned anywhere in the article.

US2007114477 describes a method to increase the sensitivity of a whispering gallery mode sensor made from a dielectric material by introducing a dielectric high index surface coating of the sensor.

US2002/0097401A1, WO 02/13337A1, WO 02/01147A1, and US 2003/0206693A1 describe the use of optical microcavities for sensing applications by means of WGMs generated via evanescent field coupling between an optical waveguide, fiber, or prism coupler and the microcavity. For excitation of a WGM, the distance between the evanescent field coupler and the microcavity has to be controlled with nanometer precision, because of the small extension of the evanescent fields of typically few hundreds of nanometers only. Further, and particularly crucial, the presence of the coupler influences the exact resonance positions of the WGM, which are typically used as the transducer mechanism for the sensing application, so that any change in the spacing between coupler and microcavity will cause a change in the resonance position and consequently may falsify the result of the measurement. Obviously, the requirement of this coupling with an external coupler jeopardizes the application of the sensors as remote sensors controlled by radiation only (for excitation of the cavity modes and their readout). In particular, sensing inside a cell on a scale of few microns is out of reach by means of this approach.

US2005/022153A1 and WO 2004/038349A1 describe an optical sensor using resonant mode excitations in an elongated capillary column. Due to its dimension, the column cannot be used for sensing inside of cells.

WO 02/07113A1, WO 01/15288 A1, US 2004/0150818A1, and US 2003/0218744A1 describe the use of metal particles, metal particle aggregates, and semicontinuous metal films close to their percolation threshold, which may be optionally located in vicinity of a microcavity, i.e., which may be optionally embedded inside of the microcavity. The metal particles/films may further bear a doped material. The use of a continuous metal shell, as, e.g., described in WO 2007129682, is not mentioned. Further, while biosensing is indicated, intracellular sensing is not mentioned anywhere.

Biomechanical forces in live cells have been measured, for example, by Herant and coworkers by means of an aspiration technique (M. Herant et al., J. Cell Sci. Vol. 119, pp. 1903-1913, 2006; M. Herant et al., J. Cell Sci. Vol. 118, pp. 1789-1797, 2005).

US 2006/0148104 A1 discloses a nanosensor or nanosensor components for the detection of ion channel activity, receptor activity or protein protein interactions. They comprise a nanoparticle and recognition domain. Following contact with cells and, optionally, internalization of the nanosensor components by a cell, the recognition domain binds to a target domain of a polypeptide of interest such as an ion channel subunit. Ion channel activity, GPCR activity or altered protein interaction results in a detectable signal.

WO 2007/075444 A2 discloses a sensor for detecting the presence of a target analyte, ligand or melocule in a test fluid. It comprises a light transmissive substrate, an array of surface plasmon resonant elements mounted thereon, a light source arranged to direct light into the SPR elements, and a detector arranged to detect light transmitted through the SPR elements. The SPR elements may include dielectric polystyrene sphere having a spherical diameter of about 770 nm with a gold coating layer about 115 nm thick.

### Disclosure of Invention

### Technical Problem

The present invention has been achieved in order to solve the problems which may occur in the related arts mentioned above.

### Technical Solution

The inventive method is defined in claim 1. Preferred embodiments of the invention are defined in the dependent claims.

### Brief Description of Drawings

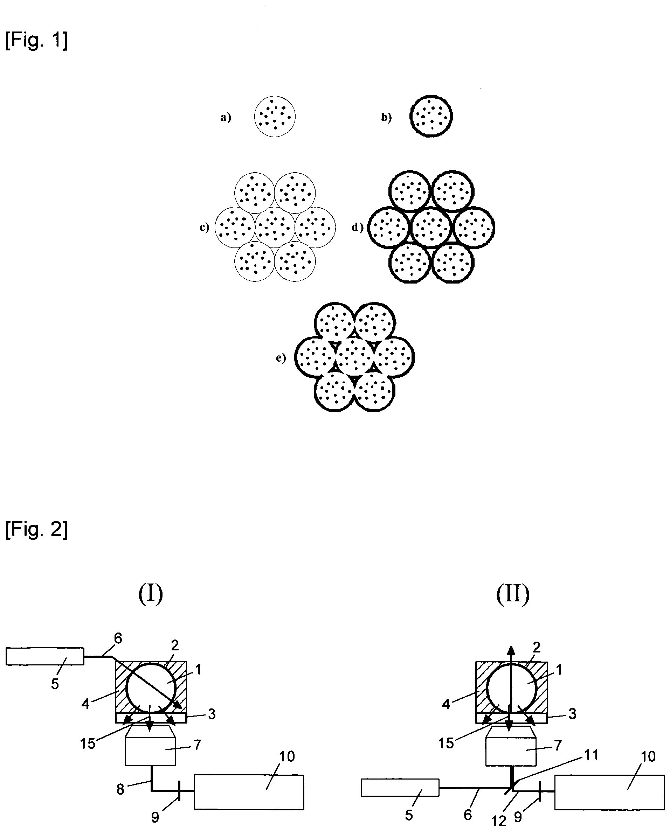

Fig. 1 shows a microresonator or a cluster as an aggregate of optical cavities or microresonators optionally containing a fluorescent material for excitation of optical cavity modes in the microresonator or cluster of optical cavities or microresonators: (a) a single optical cavity without a shell; (b) a single microresonator with a shell for achievement of wanted optical properties; (c) a cluster as an aggregate of optical cavities without shells; (d) a cluster as an aggregate of microresonators, which are coated in such a way that each core is individually coated; and (e) a cluster as an aggregate of optical cavities, which are coated in such a way that neighboring cores form optical contacts with each other;
Fig. 2 shows examples of optical set-ups for excitation and detection of optical cavity modes in microresonators or clusters of optical cavities or microresonators: In scheme (I), excitation and detection are pursued through separated light paths; and in scheme (II), the same lens is used for excitation and detection of the cavity modes of the microresonator or cluster(s) of optical cavities or microresonators;
Fig. 3 shows whispering gallery modes of a 10 µm fluorescent PS bead in air and in water, respectively;
Fig. 4 shows schematics of the effect of an elastic compression of a spherical cavity on the mode spectra: (a) in case of no compression, all 2m+1 modes of same mode number m, which can be excited at an arbitrary polar angle of the cavity are degenerate, i.e., have the same wavelength position; and (b) in case of a compression as indicated by the two force arrows, the sphere deforms, thereby causing a mode splitting due to the breakdown of spherical symmetry;
Fig. 5 shows schematics of the fluorescence control experiment proving on bead internalization: (I) biotinylated beads incorporated into the cell do not bind fluorescently labelled streptavidin; and (II) biotinylated beads not fully incorporated into the cell do bind fluorescently labelled streptavidin;
Fig. 6 shows confocal fluorescence and transmission images of a bead internalization experiment using biotinylated beads of 6 µm in diameter and human umbilical vein endothelial cells (HUVECs) with (a/b) and without (c/d) addition of cytochalisin D; (a) fluorescence image of streptavidin labelled beads after exposure to HUVECs treated with cytochalisin; (b) transmission image of (a); (c) fluorescence image of streptavidin labelled beads after exposure to HUVECs not treated with cytochalisin; and (d) transmission image of (c) ;
Fig. 7 shows whispering gallery mode spectra recorded during the transmigration of a fluorescent PS bead with a diameter of about 7.8 µm from the ambient through the cell membrane into the interior of a HUVEC;
Fig. 8 shows confocal transmission images of a PS bead with a diameter of about 6.7 µm before (left) and after (right) uptake by a HUVEC;
Fig. 9 shows schematics of bead transmigration into a cell: (I) bead contacts outer cell surface; (II) bead started to penetrate the cell membrane; and (III) bead is fully internalized by the cell;
Fig. 10 shows a temporal evolution of the resonance positions of one mode of the spectra shown in Fig. 7;
Fig. 11 shows whispering gallery mode spectra recorded during an attempt of an uptake of a PS bead of about 10 µm in diameter by a live HUVEC; and

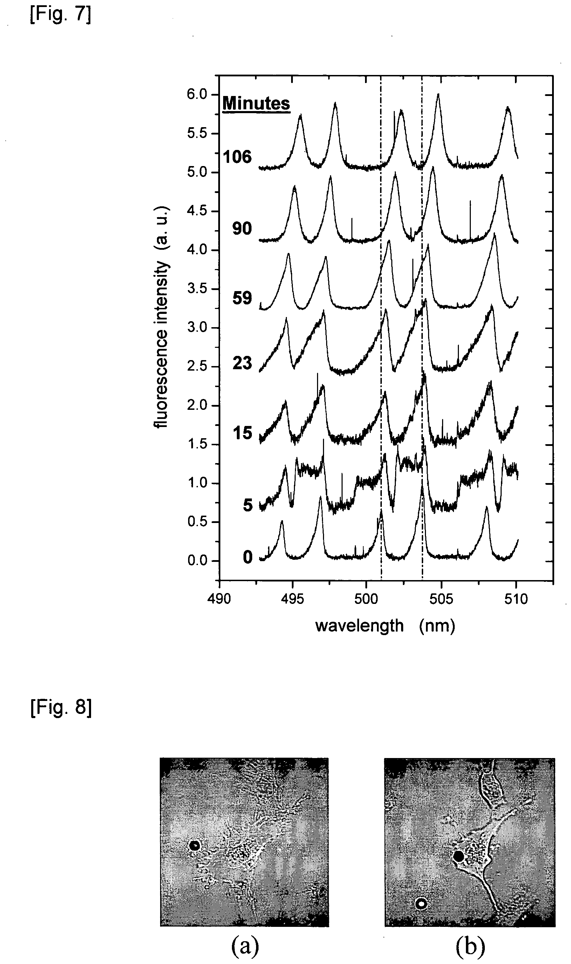

Fig. 12 shows results of the quantitative evaluation of spectra of Fig. 7 as detailed in Example 5: (a) average refractive index experienced by the bead in the course of its penetration into the cell; (b) average, minimum, and maximum total radii (bead radii + adsorption layer) of the deformed bead in the course of time as obtained from the WGM analysis; (c) intensity ratio, I_{lw} / Iᵤₚ, of the Lorentzian profiles that correspond to minimum and maximum radii, i.e., those fitted to the lower (I_{lw}) and upper (Iᵤₚ) flanks of the WGM bands (shown is the average over all those ratios within one spectrum, i.e., over all five WGM bands, thereby yielding the statistical standard deviation indicated).

### Best Mode for Carrying Out the Invention

Exemplary embodiments relating to the present invention will be explained in detail below with reference to the accompanying drawings.

### Definition of terms:

Abbreviated designations and terminologies used in this specification are defined as follows.
*HUVEC*: Human umbilical endothelial cell
*BSA*: Bovine serum albumin
*C6G*: Coumarin 6 laser grade
*PAA*: Poly(acrylic acid)
*PAH*: Poly(allylamine hydrochloride)
*PBS*: Phosphate buffered saline
*PE*: Polyelectrolyte
*PS*: Polystyrene
*PSS*: Poly(sodium 4-styrenesulfonate)
*TIR*: Total internal reflection
*TE*: Transverse electric optical mode
*TM*: Transverse magnetic optical mode

*Reflection and transmission at a surface:* In general, the surface of a material has the ability to reflect a fraction of impinging light back into its ambient, while another fraction is transmitted into the material, where it may be absorbed in the course of its travel. In the following we call the power ratio of reflected light to incident light the "Reflectivity" or "Reflectance", R, of the ambient/material interface (or material/ambient interface). Accordingly, the power ratio of transmitted light to incident light is called the "Transmittance", T, of this interface. Note, that R and T both are properties of the interface, i.e., their values depend on the optical properties of both, the material and its ambient. Further, they depend on the angle of incidence and the polarization of the light impinging onto this interface. Both R and T can be calculated by means of the Fresnel equations for reflection and transmission.

*Optical cavity:* An optical cavity is a closed volume confined by a closed boundary area (the "surface" of the cavity), which is reflective to light in the ultraviolet (UV), visible (vis) and/or infrared (IR) region of the electromagnetic spectrum. Besides its wavelength dependence, the reflectance of this boundary area may also be dependent on the incidence angle of the light impinging on the boundary area with respect to the local surface normal. Further, the reflectance may depend on the location, i.e., where the light impinges onto the boundary area. The inner volume of the optical cavity may consist of vacuum, air, or any material that shows high transmission in the UV, visible, and/or IR. In particular, transmission should be high at least for a part of those regions of the electromagnetic spectrum, for which the surface of the cavity shows high reflectance. An optical cavity may be coated with a material different from the material of which the optical cavity is made. The material used for coating may have, e.g., different optical properties, such has different refractive index or absorption coefficient. Further it may comprise different physical, chemical, or biochemical properties than the material of the optical cavity, such as different mechanical strength, chemical inertness or reactivity, and/or antifouling or related biofunctional functionality. In the following, this optional coating is referred to as "shell", while the optical cavity is called "core". Further, the total system, i.e., core and shell together, are referred to as "(optical) microresonator". The latter term is also used to describe the total system in the case that no shell material is applied. In addition to the shell discussed here, a part of the surface of the microresonator may be coated with additional layers (e.g., on top of the shell) as part of the sensing process, for example to provide a suitable biofunctional interface for detection of specific binding events or in the course of the sensing process when target molecules adsorb on the microresonator surface or a part of it.

An optical cavity (microresonator) is characterized by two parameters: First, its free spectral range (FSR) δλ (or, alternatively, its volume V in terms of size and geometry of the optical cavity (microresonator)) and second, its quality factor Q. In the following, the term "optical cavity" ("microresonator") refers to those optical cavities (microresonators) with a quality factor Q > 1. Depending on the shell material used, the light stored in the microresonator may be stored in the optical cavity solely, e.g., when using a highly reflective metal shell, or it may also penetrate into the shell, e.g., when using a dielectric or semiconducting shell. Therefore, it depends on the particular system under consideration, which terms (FSR (or volume) and Q-factor of the optical cavity or those of the microresonator) are more suitable to characterize the resulting optical properties of the microresonator.

*Free spectral range (FSR):* The free spectral range δλ of an optical system refers to the spacing between its optical modes. For an optical cavity, the FSR is defined as the mode spacing, δλₘ = λₘ - λₘ₊₁, where m is the mode number and λₘ > λₘ₊₁. The FSR may depend on the optical cavity modes under consideration. For example, it may depend on their frequencies, the direction of their propagation and/or their polarization. Analogously, for an interferometer, the FSR is the spacing between neighboring orders of intensity maxima (or minima, respectively).

*Quality factor:* The quality factor (or "Q-factor") of an optical cavity is a measure of its potential to trap photons inside of the cavity. It is defined as $Q = \frac{stored energy}{loss per roundtrip} = \frac{{ω}_{m}}{Δ {ω}_{m}} = \frac{{λ}_{m}}{Δ {λ}_{m}}$ (1) where *ωₘ* and *λₘ* are frequency and (vacuum) wavelength of cavity mode with mode number m, respectively, and *Δ_{ωm}* and *Δλₘ* are the corresponding bandwidths. The latter two equations connect the Q-factor with position and bandwidth of the optical modes inside of the cavity. Obviously, the storage potential of a cavity depends on the reflectance of its surface. Accordingly, the Q-factor may be dependent on the characteristics of the cavity modes, such as their wavelength, polarization, and direction of propagation.

*Volume of an optical cavity:* The volume of an optical cavity is defined as its inner geometrical volume, which is confined by the surface of the cavity, i.e., the reflective boundary area.

*Ambient (environment) of an optical cavity or microresonator:* The "ambient" or "environment" of an optical cavity or microresonator is that volume enclosing the cavity (microresonator), which is neither part of the optical cavity, nor of its optional shell (in the case of a microresonator). In particular, the highly reflective surface of the optical cavity (or microresonator) is not part of its ambient. It must be noted that in practice, the highly reflective surface of the optical cavity (microresonator) has a finite thickness, which is not part of the ambient. The same holds for the optional shell, which has also a finite thickness and does not belong to the microresonator's ambient. The ambient or environment of an optical cavity (microresonator) may comprise entirely different physical and chemical properties from that of the cavity (microresonator), in particular different optical, mechanical, electrical, and (bio-) chemical properties. For example, it may strongly absorb in the electromagnetic region, in which the optical cavity (microresonator) is operated. The ambient may be heterogeneous. The extension to which the enclosing volume is considered as ambient, depends on the application. In the case of a microresonator brought into a microfluidic device, it may be the microfluidic channel. Typically, the ambient it is that part of the enclosing volume of the optical cavity or microresonator, which is of relevance for the optical cavity's (microresonator's) operation, for example in terms of its impact on the optical cavity modes of the cavity (microresonator) in view of their properties, excitation, and/or detection.

*Optical cavity mode:* An optical cavity mode or just "cavity mode" is a wave solution of the electromagnetic field equations (Maxwell equations) for a given optical cavity or microresonator. Different cavity modes may have different directions of propagation, different polarizations, and different frequencies depending on geometry and optical properties of the optical cavity or microresonator. These modes are discrete (i.e., countable) and can be numbered, e.g., with integers, due to the restrictive boundary conditions imposed by the optical cavity or microresonator. Accordingly, the electromagnetic spectrum in presence of the optical cavity (microresonator) can be divided into allowed and forbidden zones. The wave solutions depend on the shape and volume of the cavity as well as on the reflectance of the boundary area, i.e., the cavity surface, which may be heterogeneous, i.e., exhibit different optical properties, such as different reflectance, at different locations.

The full set of solutions of Maxwell's equations for a given optical cavity (microresonator) comprises also the fields in its ambient. For the fields outside, i.e., in the ambient of the optical cavity (microresonator), two kinds of solutions must be distinguished: those where the solutions describe freely propagating waves in the ambient and those where the solutions describe evanescent fields. The latter come into existence for waves, for which propagation in the ambient is forbidden, e.g., due to total internal reflection at the surface of the optical cavity (microresonator). One example for optical cavity modes that comprise evanescent fields in the ambient are WGMs. Another example is related to microresonators with a metal coating as shell. In these cases, surface plasmons may be excited at the metal/ambient interface, which also may exhibit an evanescent field extending into the ambient. In all these cases the evanescent field extents into the ambient typically for a distance roughly of the order of the wavelength of the wave (e.g., light wave or charge density oscillation) generating the evanescent field.

It should be noted that in practice, also evanescent fields may show some leakage, i.e., propagation of photons out of the evanescent field into the far field of the optical cavity, i.e., far beyond the extension of the evanescent field into the ambient. Such waves are caused, for example, by scattering of photons at imperfections or other kinds of causes, which are typically not accounted for in the theoretical description, since the latter typically assumes smooth interfaces and boundary layers. Such stray light effects are not considered in the following, i.e., do not hamper the evanescent field character of an ideally evanescent field. In the same way, evanescent field tunneling across a nanometer-sized gap into a medium, in which wave propagation is then allowed, such as a prism, waveguide, or near-field probe, does not hamper the evanescent field character of the evanescent field.

For spherical cavities, there exist two main types of solutions, for which the wavelength dependence can be easily estimated, one for light propagation in radial direction and one for light propagation along the circumference of the sphere, respectively. In the following, we will call the modes in radial direction *"Fabry-Perot Modes"* (FPM) due to analogy with Fabry-Perot interferometers. The modes forming along the circumference of the spheres are called *"Whispering Gallery Modes"* (WGM) in analogy to an acoustic phenomenon. For a simple mathematical description of the wavelength dependence of these modes, we use the standing wave boundary conditions in the following: ${λ}_{m} = \frac{4 R {n}_{cav}}{m} , m = 1 , 2,3 , ..$ (2) for FPM, which states that the electric field at the cavity surface as to vanish for all times, as is the case e.g., for a cavity with a metallic surface or shell. For WGM, the boundary condition yields ${λ}_{m} = \frac{2 π R {n}_{cav}}{m} , m = 1 , 2,3 , ..$ (3) which basically states that the wave has to return in phase after a full roundtrip. In both formulas, "m" is an integer and is also used for numbering of the modes, i.e., as their mode number, R is the sphere radius, and n_{cav} the refractive index inside of the cavity. For sake of brevity, in the following the term "cavity mode m" will be used synonymously with the term "cavity mode with mode number m".

From equations (2) and (3), the FSR δλₘ of FPM and WGM, respectively, of spherical cavities can be calculated to ${δλ}_{m} = \frac{{λ}_{m}}{m + 1} = \frac{{λ}_{m + 1}}{m}$ (4)

*Mode coupling:* We define mode coupling as the interaction between cavity modes of two or more optical cavities or microresonators that are positioned in contact with each other or in close vicinity to allow an optical contact. This phenomenon has been pointed out by S. Deng et al. (Opt. Express Vol. 12, pp. 6468-6480, 2004), who have performed simulations on mode guiding through a series of microspheres. The same phenomenon has been experimentally demonstrated by V. N. Astratov et al. (Appl. Phys. Lett. Vol. 83, pp. 5508-5510, 2004), who used a chain of non-fluorescent microspheres as waveguide and a single fluorescent microsphere positioned at one end of the microsphere waveguide in order to couple light into the chain. They have shown that the cavity modes produced by the fluorescent microsphere under excitation can propagate along the non-fluorescent microsphere chain, which means that light can be coupled from one sphere to another. The authors related this coupling from one microsphere to another to "the formation of strongly coupled molecular modes or crystal band structures".

T. Mukaiyama et al. (Phys. Rev. Lett. Vol. 82, pp. 4623-4626, 1999) have studied cavity mode coupling between two microspheres as a function of the radius mismatch between the microspheres. They have found that the resulting cavity mode spectrum of the bi-sphere system is highly depending on the radius mismatch of the two microspheres. More recently, P. Shashanka et al. (Opt. Express Vol. 14, pp. 9460-9466, 2006) have shown that optical coupling of cavity modes generated in two microspheres can occur despite of a large radius mismatch (8 and 5 µm). They have shown that the coupling efficiency depends strongly on the spacing between the two microspheres and as a result, the positions of the resonant wavelengths also depend on the microsphere spacing.

Further, optical cavity modes of optical cavities or microresonators in close vicinity of each other may be mutually altered by the presence of the neighboring optical cavities or microresonators, e.g., exhibit different frequencies, bandwidths, and/or directions of propagation as compared to the isolated optical cavity or microresonator in absence of its neighbors. This may happen, for example, if the optical cavities or microresonators come so close to each other that they share their evanescent fields. In such case, they may sense each other with corresponding changes in their respective optical cavity modes. For sake of simplicity, also this effect will be included into the term "mode coupling" in the following.

*Optical contact:* Two optical cavities or microresonators are said to have an "optical contact", if light can transmit from one resonator to the other. In this sense, an optical contact allows potentially for mode coupling between two optical cavities or microresonators in the sense defined above. Accordingly, an optical cavity or microresonator has an optical contact with the substrate if it may exchange light with it.

*Clusters:* A cluster is defined as an aggregate of microresonators and/or optical cavities of arbitrary and optionally different geometry and shape, which may be formed either in a one-, two-, or three-dimensional fashion. The individual microresonators and/or optical cavities are either positioned in such a way that neighboring microresonators and/or optical cavities are in contact with each other or in close vicinity in order to promote the superposition of their optical cavity mode spectra and/or mode coupling. Microresonators and/or optical cavities in contact may be in physical contact, i.e., touching each other, or, e.g., in optical contact as defined above. Microresonators and/or optical cavities in close vicinity to each other may be sufficiently close for superposition of their evanescent fields, which extent typically some hundreds of nanometers from their surface into the ambient, or sufficiently close for collective excitation and/or detection of their cavity mode spectra (independent of the timing of such collective excitation and/or detection).

Alternatively, a cluster of microresonators and/or optical cavities is an aggregate of arbitrary geometry and shape of microresonators and/or optical cavities of arbitrary and optionally different geometry and shape, which is collectively operated, e.g., in which optical cavity modes are collectively excited and/or collectively detected. However, the term "collectively" is meant to be independent of the timing of excitation and/or detection, which may be performed in a parallel fashion (e.g., by simultaneous exposure of the entire cluster(s) to the excitation radiation and/or detection of the optical cavity mode spectra by means of an in parallel operating (multichannel) detection device, such as a detector array or a CCD camera) or in a serial way by scanning either the light source(s) and/or detector(s) through the wanted spectral range. Also, combinations of these parallel and serial schemes as well as more complex timing sequences are feasible. In this sense, a cluster of microresonators and/or optical cavities can also be viewed as an aggregate of arbitrary geometry and shape of microresonators and/or optical cavities of arbitrary and optionally different geometry and shape, which exhibits a characteristic spectral fingerprint when probed under suitable conditions (independent of the timing and/or other relevant conditions). It should be further noted that the microresonators and/or optical cavities comprising the cluster may have different optical, physical, chemical and/or biological function and also bear different kinds of shells of different function. For example, they may exhibit different kinds of optical cavity mode spectra (e.g., FPM or WGM), which may be excited by different optical mechanisms (e.g., via evanescent field coupling or by excitation of one or different kinds of fluorescent material(s)). As already stated above, independent of its composition, the only crucial criterion is that the cluster exhibits a characteristic spectral fingerprint when probed and analyzed under suitable conditions.

Some examples of clusters are shown in Fig. 1. The individual optical cavities may be coated as described above in either such a way that each cavity is individually coated (Fig. 1(d)) or in such a way that neighboring cavities within a cluster form optical contacts with each other (Fig. 1(e)). The clusters may be formed randomly or in an ordered fashion for example using micromanipulation techniques and/or micropatterning and/or self-assembly. Also, combinations of all schemes shown in Fig. 1 are feasible. Thereby, photonic crystals may be formed. The clusters may form in the course of a sensing process, for example inside of a medium, such as a live cell or a part of it, after (partial) penetration of optical cavities (microresonators) into the medium to facilitate sensing of the wanted physical, chemical, biochemical, and/or biomechanical property. For the sake of brevity, the term "clusters of optical cavities and/or microresonators" will be called "clusters of optical cavities or microresonators" in the following.

*Lasing threshold:* The threshold for stimulated emission of a microresonator (optical cavity), also called the "lasing threshold", is defined as the (e.g., optical, electrical, or electromagnetical) pump power of the microresonator where the light amplification via stimulated emission just compensates the losses occurring during propagation of the corresponding light ray within the microresonator. Since the losses for light rays traveling within a cavity mode are lower than for light rays that do not match a cavity mode, the cavity modes exhibit typically the lowest lasing thresholds (which may still differ from each other depending on the actual losses of the respective modes) of all potential optical excitations of a microresonator. In practice, the lasing threshold can be determined by monitoring the optical output power of the microresonator (e.g., for a specific optical cavity mode) as a function of the pump power used to stimulate the fluorescent material of the microresonator (also called the "active medium" in laser physics). Typically, the slope of this dependence is (significantly) higher above than below the lasing threshold so that the lasing threshold can be determined from the intersection of these two dependencies. When talking about the "lasing threshold of an optical microresonator", one typically refers to the lasing threshold of that optical cavity mode with the lowest threshold within the observed spectral range. Analogously, the lasing threshold of a cluster of microresonators addresses the lasing threshold of that optical cavity mode within the cluster with the lowest threshold under the given conditions.

*Interferometry:* Interferometry is the technique of using the pattern of interference created by the superposition of two or more waves to diagnose the properties of the aforementioned waves. The instrument used to interfere the waves together is called an "interferometer". In the plane of observation, an interferometer produces a pattern of varying intensity, which originates from the interference of the superposed waves. Typically, the pattern exhibits circular symmetry and consists of a center spot surrounded by bright (and dark) rings. It is therefore referred to as "fringe pattern". The center spot is called "central fringe".

*Analysis of Optical Cavity Modes:* According to the definitions above, optical cavity modes provide information about the optical cavity (-ies) or microresonator(s), in which they are generated, with respect to the cavity's (-ies) or microresonator's (-s') geometry (as expressed, e.g., by the FSRs, the mode spacings and mode properties in general, in terms of their frequencies, bandwidths, polarizations, directions and kinds of propagation, field strengths, phases, intensities, etc.), their optical trapping potential for a certain wavelength and/or polarization (as expressed e.g., by the respective Q-factor), the cavity's (cavities') or microresonator's (-s') physical condition, its (their) ambient(s), and/or interaction(s) with its (their) ambient(s) (as expressed e.g., by appearance, disappearance, increase or decrease in field strength(s) or intensity (-ies), change of phase(s) or polarization(s), broadening, shifting, and/or splitting of cavity modes).

All this information may be revealed by analysis of optical cavity modes with respect to the measurement of their properties, such as mode positions (frequencies), mode spacings, mode occurrences, field strengths, phases, intensities, bandwidths, Q-factors, polarizations, directions and kinds of propagation, and/or changes thereof. The term "analysis of optical cavity modes", which will be used for the sake of brevity in the following, comprises all kinds of measurements, which allow the determination of one or more of these mode properties or changes thereof.

*Transmigration:* In the following, the term "transmigration" describes a process, in which a single and/or more than one optical cavity or microresonator and/or cluster of optical cavities or microresonators passes through a boundary, such as a cell membrane or an entire cell. In the literature, the term "transmigration" refers often to the latter only, i.e., the migration of a particle or substance through a cell as a sequence of the processes of endocytosis and (subsequently) exocytosis. Our definition reflects the view that also in case of particle internalization, e.g., via endocytosis, the cell membrane is crossed.

### Descriptions of embodiments

A comprehensive understanding of the biomechanical and biochemical processes in (live) cells is of utmost importance for the further advance of our understanding of cell function and will have impact on a variety of biomedical applications, such as cancer treatment, tissue engineering, targeted drug delivery, and related art. Due to the urge of probing and sensing (live) cells, a multitude of different techniques has been developed for the study of biomechanical and biochemical processes on a cellular level, which are for instance labelling techniques that have been developed to target single biomolecules inside of cells as well in their close proximity, e.g., their extracellular matrix; rheological methods that have been used to study cell mechanics and their impact on cell adhesion, proliferation, and growth; and nanocarriers that have been designed for targeted drug delivery and sensing. The present embodiments describe a way of real-time in-vitro sensing of mechanical and/or biochemical cell properties or functions by means of an optical cavity mode sensor that (partially) penetrates the cell. This approach touches on a number of different technologies and fields of research from several points of view. In the following, the most important applications are summarized.

Cell mechanics: Mechanical stimuli, such as forces applied to a cell membrane or the mechanical properties of a substrate to which cells adhere, are known as essential factors of biological function, and mechanical stimuli can be as important as biochemical ones (P. A. Janmey & D. A. Weitz, Trends Biochem. Sci., Vol. 29, pp. 364-370, 2004). Therefore, the study of the mechanical behavior of cells, the measurement of forces, and related rheological properties are of high interest and have been performed by various techniques, which are briefly summarized in the following.

For the measurement of extracellular forces, a variety of methods have been applied, such as rheological techniques (M. Mercier-Bonin et al., J. Coll. Interf. Sci., Vol. 271, pp. 342-350, 2004), cantilevers (C. G. Galbraith & M. P. Sheetz, Proc. Natl. Acad. Sci., Vol. 94, pp. 9114-9118, 1997), pedestals (J. L. Tan et al., Proc. Natl. Acad. Sci., Vol. 100, pp. 1484-1489, 2003), atomic force microscopy (AFM; M. Radmacher et al., Biophys. J., Vol. 70, pp. 556-567, 1996), and magnetic (A. Bausch et al., Biophys. J., Vol. 75, pp. 2038-2049, 1998) and optical (J. D. Klein et al., J. Coll. Interf. Sci., Vol. 261, pp 379-385, 2003) tweezers.

Forces inside of cells are more difficult to access. Here, typically small probe particles are traced in dependence of either external forces (B. G. Hosu, Rev. Sci. Instr., Vol. 74, pp. 4158-4163, 2003) or their thermal motion (John C. Crocker et al., Phys. Rev. Lett., Vol. 85, pp. 888-891, 2000). The particles can either be brought into the cell from the outside or be endogenous (cf. Janmey & Weitz above). Alternative methods take advantage of intrinsic strain fluctuations inside the cell and visualize them for example by differential interference contrast microscopy (A. W. C. Lau et al., Phys. Rev. Lett., Vol. 91, pp. 198101/1-4, 2003) or fluorescent speckle microscopy (L. Ji et al., Cell Mechanics, Vol. 83, pp. 199, 2007). The advantage of latter methods is that no external particle has to be introduced into the cell, which might alter the rheology of the cell due to its presence. In fact, significant differences in the shear moduli measured by tracing of particles either actively moved or driven by Brownian motion have been found, thus indicating a distortion of the viscoelastic properties of the cell interior depending on the method of measurement applied (cf. Lau et al.). Accordingly, there is a general trend of minimizing the influence of the probe particle on the rheology of the cell.

Intracellular sensing: Besides mechanical forces and rheological properties, another aspect of intracellular sensing is related to the exploration of intracellular biochemical functions and processes. Here, a whole zoo of methods has evolved. Most notably, various fluorescence techniques have been developed for single molecule tracing and detection (P. M. Viallet & T. Vo-Dinh, Curr. Prot. Pept. Sci., Vol. 4, pp. 375-388, 2003), distance measurements (A. Miyawaki, Developmental Cell, Vol. 4, pp. 295-305, 2003), and to achieve optical resolution below the Abbé limit (S. Hell, Science, Vol. 316, pp. 1153-1158). As fluorescent labels, alternatively, also semiconductor quantum dots or plasmonic nanoparticles, such as gold nanoparticles, can be utilized (S. Kumar et al., Nano Lett., Vol. 7, pp. 1338-1343, 2007). Further, complex multicomponent particles have been synthesized to improve the specificity of targeting (H. A. Clark et al., Sensors Actuat. B, Vol. 51, pp. 12-16, 1998).

All these methods have in common that they serve mainly as labels for indication of certain binding events, presence of analytes, or their visualization. Quantitative measurements, i.e., in terms of concentration of an analyte, are not easy to achieve mainly due to a low signal-to-noise (S/N) ratio, the difficulty to introduce suitable reference measurements, and an unknown biochemical and physical environment of the probe. Therefore, typically, the results obtained are rather qualitative than quantitative.

Particle incorporation: Particles have been incorporated in live cells not only for sensing and imaging applications, but also for drug delivery (N. G. Portney & M. Ozkan, Anal. Bioanal. Chem., Vol. 384, pp. 620-630, 2006) and cancer treatment, i.e., by radiation-induced thermal treatment of cancer cells (L. Gao et al., Nature Nanotechnol., Vol. 2, pp. 577-583, 2007; P. K. Jain et al., Plasmonics, Vol. 2, pp. 107-118, 2007).

Moehwald and coworkers utilize hollow microcapsules and nanocapsules for targeted drug delivery (G. B. Sukhorukov & H. Moehwald, Trends Biotechnol., Vol. 25, pp. 93-98, 2007). Current research aims at the implementation of optical, magnetic, or ultrasonic controls for guided motion.

Transmigration: Particle incorporation can also be used for the study of natural processes, such as leukocyte transmigration through endothelial cells (J. D. van Buul et al., Arterioscler. Thromb. Vasc. Biol., Vol. 27, pp. 1870-1876, 2007). This process is involved in the body's inflammatory response and is assumed to induce a number of signaling events at the transmigrating leukocytes for their activation. The details of these mechanisms, however, are poorly understood so far. In this context, the study of particles mimicking leukocytes and their uptake by endothelial cells is an important approach.

R. Wiewrodt et al. studied the bead-uptake of biofunctionalized polystyrene (PS) beads by HUVECs in a particle size range from 80 nm to 5 µm. They found an upper limit for particle incorporation for particle sizes beyond 500 nm (R. Wiewrodt et al., Hemostas. Thrombos. Vascul. Biol., Vol. 99, pp. 912-922, 2002). These findings were corrobated by a later study by D. Hoekstra and coworkers (J. Rejman et al., Biochem. J., Vol. 377, pp. 159-169, 2004), which also observed the incorporation of fluorescent PS particles with sizes up to 500 nm.

Phagocytosis: Another aspect of particle incorporation into live cells is related to phagocytosis, which is the cellular process of engulfing solid particles by the cell membrane to form an internal phagosome. Phagocytosis is involved in the acquisition of nutrients for some cells, and in the immune system it is a major mechanism used to remove pathogens and cell debris (A. Aderem and D. M. Underhill, Annu. Rev. Immunol. Vol. 17, pp. 593-623, 1999).

The uptake of PS beads by neutrophils in-vitro has been studied in view of the mechanical properties of the cells experimentally and theoretically (M. Herant et al., J. Cell Sci. Vol. 119, pp. 1903-1913, 2006). Curtis and coworkers (V. K. Koladi et al., Soft Matter Vol. 3, pp. 337-348, 2007) incorporated PS beads with sizes up to 6 µm into fibroblast cells, where they assembled into colloidal crystallites. While in these articles as well as in related literature such particle incorporation has been used as a novel tool for the study of cell properties and functions, such as the exploration of the physical environment within cells or the study of cytoskeletal rearrangements, cytoskeletal forces and stress, further conditioning or preparation of the incorporated particles for utilization as active optical sensors has not been mentioned. In particular, the potential influence of the presence of the particles on fluorescence emission profiles of dyed cells has not been discussed at all.

Despite all of these different techniques and developments, up to date it is still a major challenge to get quantitative information about biomechanical and biochemical processes on a cellular level, since most of the techniques applicable to single cell studies are not able to offer the dynamic range and S/N ratio required for quantitative determination of such biomechanical and biochemical quantities. For example, a fluorescent label typically acts as a binary system of the "on/off" type, so that it can convey only information on presence or absence of a targeted molecule or occurrence/non-occurrence of a biomechanical or biochemical process. To some extent, this can be helped by averaging over a large number of labels, but even then the precision of the result is limited due to a limited S/N ratio and side effects, such as bleaching, multiphoton effects, non-radiative decays, and emitter-emitter interactions.

The reason for these shortcomings is that all methods applied to intracellular optical sensing so far rely on the evaluation of intensity information, such as the intensity of light radiated from fluorescence labels or plasmonic nanoparticles. Tracing of intensity changes for quantitative measurements, however, puts severe demands on the stability and reproducibility of the experiment, and further requires the determination of the background signal with sufficient precision. These demands are still difficult to fulfill on single cell level.

To overcome the problems involved in quantitative studies on single cells with state-of-the-art methods, the inventors of the present embodiments introduce a phase-sensitive measurement principle, which is much less dependent on intensity fluctuations, and therefore much more suitable for quantitative studies on biomechanical and biochemical processes as well as for molecular sensing inside of cells and their close vicinity. Surprisingly, the inventors found that their approach is capable of sensing even during the transmigration of the sensor from the outside through the membrane into the cell, thereby opening access to a transition region that was hardly accessible so far.

For introduction of the phase-sensitive measurement principle, the inventors used optical cavity mode excitations in microscopic particles. While the particle comprising the microresonator does not need to be spherical, a microsphere may be advantageous for measuring intracellular or intramembrane stress and related biomechanical properties. Further, microspheres are commercially available and easy to treat with. In principle, however, any kind of microresonator or cluster of optical cavities or microresonators can be used for same or similar purpose as long as it can be incorporated into a cell and gives rise to cavity mode excitations.

The optical cavity, as depicted in Fig. 2 with a microsphere (1) as an example, is non-metallic and contains a fluorescent material for excitation of optical cavity modes. Further, it might bear an optional shell for achievement of wanted optical properties. For example, a metallic shell will change the reflectivity at the boundary, thus changing the resonance conditions of the optical cavity, and might further cause, e.g., the excitation of surface plasmons at the metal-shell/ambient interface (M. Himmelhaus, SPIE Proc. Vol. 6862, pp. 68620U/1-8, 2008), while a non-metallic shell may be used, e.g., for enhancement of sensitivity (I. Teraoka and S. Arnold, J. Opt. Soc. Am. B Vol. 23, pp. 1434 - 1441, 2006) or for amplification of optical cavity modes (WO2005116615). As already defined above, we will refer to the whole system, i.e., non-metallic fluorescent optical cavity and optional shell, as "microresonator" (1). The microresonator may bear a further biomechanical and/or biochemical function, e.g., introduced by a suitable attachment or coating, enabling the microresonator to sense the wanted process or molecule in a quantitative fashion. Fig. 2 further shows examples of optical set-ups suitable for excitation and detection of optical cavity modes in microcavities. In Fig. 2(I), excitation and detection are pursued through separated light paths. Namely, a fluorescent microresonator 1 coated with an optional coating 2 is disposed on a substrate 3. The fluorescent microresonator 1 with the optional coating 2 is located in microfluidic flow environment 4. A light source 5 emits an excitation light beam 6 to the fluorescent microresonator 1. The fluorescence emission 15 excited by the light beam 6 is collected by a lens 7 and transmitted through an optical fiber 8 via an optical filter 9 to a detection system 10 suitable for analysis of optical cavity modes, which may apply, e.g., a monochromator and/or interferometer and a photodetector (e.g., a CCD, a photodiode array, a photodiode, or other kind of light-sensitive device). In Fig. 2(II), the same lens 7 is used for excitation and detection of the cavity modes. Namely, the light beam 6 from the light source 5 is reflected by a beam splitter 11 and emitted to the fluorescent microresonator 1 via the lens 7. The fluorescence emission 15 excited by the light beam 6 is collected to the same lens 7 and guided to the detection system 10 by the beam splitter 11 and a mirror-guided detection path 12 (In Fig. 2 (II), the fluorescence emission 15 of the microresonator 1 is indicated only in the directions most relevant to detection, neglecting contributions from scattering and/or reflection).

These two schemes are only examples. Other set-ups are possible as well. Also, some parts of the schemes may be interchanged or combined. For example, also scheme (I) can utilize a mirror-guided detection path 12 and scheme (II) can utilize an optical fiber (8) for signal propagation. Other means of signal propagation and transduction may be feasible as well.

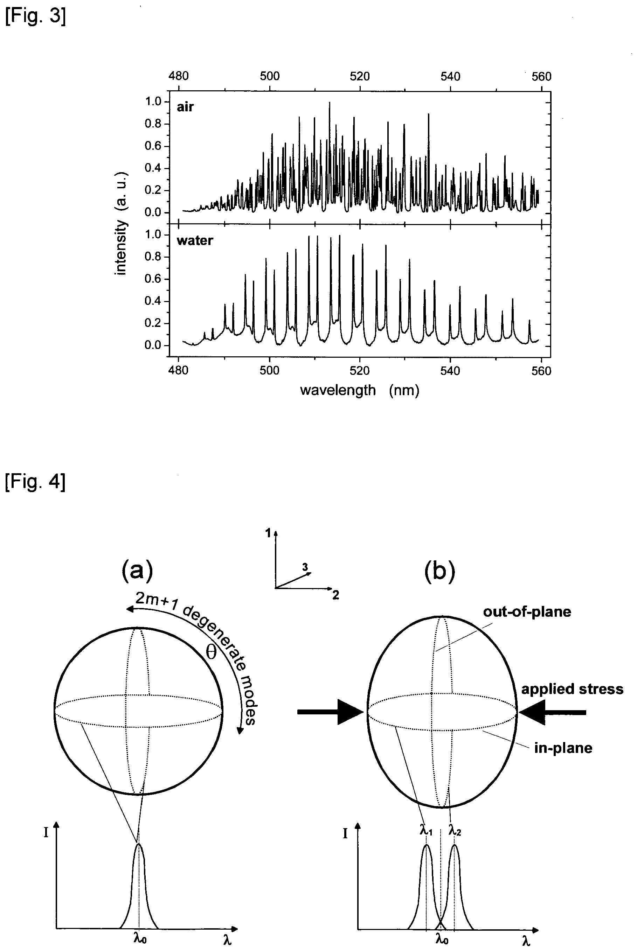

As an example of the measurement principle, Fig. 3 displays optical cavity modes excited in a Coumarin 6G doped PS bead of 10 µm nominal diameter in air and in deionized water. While in air, a large number of modes can be excited (cf. A. Weller et al., Appl. Phys. B, 2008), in water only the so-called first order cavity modes can be observed. These modes, with their narrow bandwidths, modulate and alter the natural emission spectrum of the dye drastically, thereby providing a highly sensitive measure for any mechanical or chemical change of the particle or in its ambient. For example, as illustrated in Fig. 4, in the case of a mechanical deformation of an otherwise spherical cavity, the modes do split because of the differences in optical pathways in direction of and normal to the deformation inducing forces, respectively. In a similar fashion, molecular adsorption onto the bead's surface causes an effective increase of particle size and thus a red shift of the resonant modes. For further details of the optical properties and in particular the sensing potential of these systems, we refer to the literature (A. Francois & M. Himmelhaus, Sensors Vol. 9, pp. 6836-6852, 2009; A. Francois & M. Himmelhaus, Appl. Phys. Lett. Vol. 92, pp. 141107/1-3, 2008; A. Francois et al., SPIE Proc. Vol. 6862, pp. 686211/1-8, 2008; F. Vollmer and S. Arnold, Nature Methods Vol. 5, pp. 591 - 596, 2008).

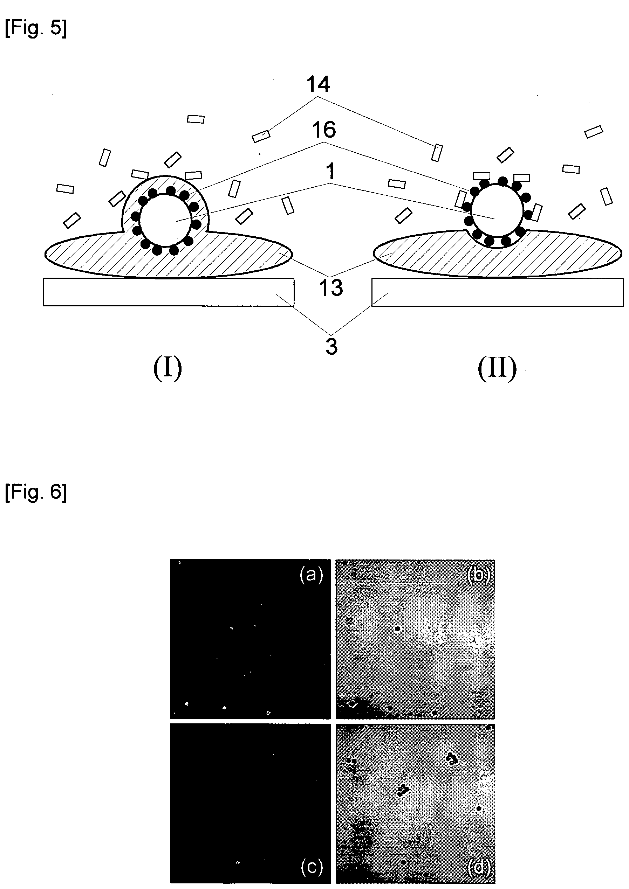

When exposing fluorescent PS beads of up to about 8 µm in diameter and suspended in HUVEC growth medium to surface-adsorbed cells, the inventors surprisingly found that the beads were incorporated by the cells and optical cavity modes were observable during the entire process of membrane transmigration and even from the inside of the cells. Since the sensing information is comprised by the positions of the cavity modes rather than their absolute intensities, a highly robust and precise tool for sensing of biomechanical and biochemical events as well as for detecting molecules inside of cells or in their close vicinity has been found. As an independent proof that the particles are in fact incorporated, the inventors used a membrane labelling technique as detailed in Example 1. In brief, the beads are functionalized with a biotin label. As illustrated in Fig. 5, the bead 1 disposed on the substrate 3 after exposure to the live cells 13, i.e., the whole system (beads 1 and cells 13 in growth medium) is exposed to fluorescently labelled streptavidin 14, which binds with high affinity to the biotin-labels 16 of beads 1 in the case that the bead surface is accessible (Fig. 5(II)). However, in the case that the bead 1 is fully incorporated into the cell 13, the cell membrane shields it from the streptavidin 14 (Fig. 5(I)). Accordingly, incorporated beads 1 are found to be non-fluorescent. To prove this, confocal fluorescence microscopy was used. An example of the observations is displayed in the confocal images of Fig. 6. While the transmission images prove the existence of a bead at a certain position of the images, the fluorescence images, which were acquired simultaneously, show whether a bead is fluorescent or not. As a control, HUVECs were exposed to cytochalisin D prior to the bead-uptake experiment to inactivate their cytoskeleton. In such case, the bead uptake was suppressed. This can be seen from Figs. 6(a) and 6(b), which show the corresponding fluorescence and transmission images. Obviously, all of the beads are fluorescent, thus indicating that they remained on the outside of the cell membranes. In contrast, when the cytoskeleton of the cells was active, beads were not fluorescent as can be seen in Figs. 6(c) and 6(d). The only fluorescent bead here is obviously not in contact with a cell, thereby giving evidence that proper settings for fluorescence detection had been chosen. To put these observations on a more quantitative scale, fluorescent and non-fluorescent beads were counted and compared to each other in both cases. As detailed in Example 1, the results show that cytochalisin D is a very effective agent for suppression of the bead-uptake, while all beads that come into contact with a cell are incorporated in the case that the agent is missing. It was found that the HUVECs chosen for the experiment were able to incorporate beads with sizes up to ∼8 µm, while beads of larger size (∼10 µm) showed very little success in complete integration into the cells.

That PS beads of several micrometers in diameter can still be incorporated by live HUVECs is surprising, because the literature reported so far an upper limit for particle incorporation by HUVECs of about 500 nm (R. Wiewrodt et al., Hemostas. Thrombos. Vascul. Biol., Vol. 99, pp. 912-922, 2002; J. Rejman et al., Biochem. J., Vol. 377, pp. 159-169, 2004). The study of particle incorporation into endothelial cells, such as HUVECs, is of particular interest, because endothelial cells comprise the interface between blood flow and local tissue and thus are intensively studied for their potential of mediating between these different biological systems. For example, transmigration of leukocytes through the endothelial cell layer is known to be stimulated by the endothelial cell surface. In the course of the process of transmigration, endothelial cells are supposed to condition the leukocytes further for their inflammatory and immunological response (J. D. van Buul et al., Arterioscler. Thromb. Vasc. Biol. Vol. 27, pp. 1870-1876, 2007). Particle uptake by the endothelium might therefore be useful for various biomedical applications, such as monitoring and sensing of hormone levels and/or other solute concentrations, (targeted) drug and/or energy release and/or dosing, and the like.

Another aspect of particle incorporation into cells for these and other purposes is related to phagocytosis, which is the cellular process of engulfing solid particles by the cell membrane to form an internal phagosome. The phagosome is usually delivered to the lysosome, an organelle involved in the breakdown of cellular components, which fuses with the phagosome. The contents are subsequently degraded and either released extracellularly via exocytosis, or released intracellularly to undergo further processing. Phagocytosis is involved in the acquisition of nutrients for some cells, and in the immune system it is a major mechanism used to remove pathogens and cell debris. Bacteria, dead tissue cells, and small mineral particles are all examples of objects that may be phagocytosed. Thus, phagocytosis is a natural mechanism for particle uptake used by various kinds of cells, which can also be utilized for the present embodiments. Also the biochemical processes typically following particle internalization, such as lysosome fusion, might be advantageously utilized. Lysosome fusion, for example, might be used, e.g., via the corresponding change in pH value upon fusion or the arrival of certain enzymes delivered by the lysosome, for triggering sensing or another event, such as a (controlled) drug and/or energy release.

Such applications of the present embodiments are interesting because various kinds of cells show capability of phagocytosis. So-called "professional phagocytes" are those who require the mechanisms of phagocytosis to fulfil their function, such as macrophages, polymorphonuclear granulocytes (PMNs), and monocytes, which are part of the immune system. Other cells, such as endothelial cells and fibroblasts, have also shown to exhibit phagocytosis, even though sometimes less effective in terms of time scales and maximum particle size that can be incorporated (M. Rabinovitch, Trends Cell Biol. Vol. 5, pp. 85-87, 1995).

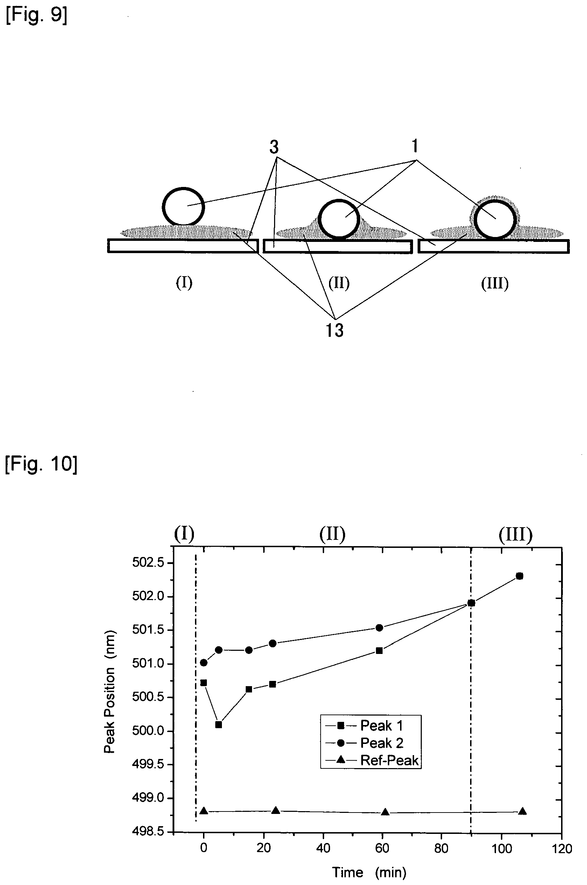

On the basis of above findings and perspectives, the incorporation of fluorescent PS beads with diameters of 6 - 10 µm by live HUVECs was followed by recording the beads' optical cavity modes. Since the beads were dielectric without any special coating, whispering gallery modes were observed as shown in the sequence of Fig. 7. For illustration, a bead uptake similar to the one that happened during the recording of the spectra of Fig. 7 is displayed in Fig. 8. The time span between the acquisitions of the two images of Fig. 8 is about one hour. As shown in the left image of Fig. 8, acquisition of the spectra shown in Fig. 7 started when the bead was in contact with the cell. That the bead has already contacted can be seen from the slightly asymmetric mode profiles of the first spectrum of Fig. 7 (t=0). The next spectrum, acquired 5 min later, is highly asymmetric, thus giving evidence that the bead experiences a highly asymmetric environment. Probably, as illustrated in Fig. 9, the bead 1 on the substrate 3 has penetrated into the cell 13 only partially causing an inhomogeneous dielectric environment, and further experiences some deformation due to mechanical stress induced by the membrane and/or the cytoplasma. While in later stages the spectra look more symmetric, a slight shoulder in the modes can be seen for up to 90 min after the first spectrum. Only the last spectrum, acquired after 106 min, exhibits symmetric modes. From the appearance of this last spectrum we conclude that the bead was not damaged during the transmigration and that it has still spherical shape. From the new mode positions, the local refractive index inside of the cell can be readily obtained either via suitable calculations (A. Francois & M. Himmelhaus, Sensors Vol. 9, pp. 6836-6852, 2009; P. Zijlstra et al., Appl. Phys. Lett. Vol. 90, pp. 161101/1-3, 2007) or by comparison with reference measurements as exemplified in Example 4. Since the mode splitting was reversible, either elastic deformation and/or an inhomogeneous environment could have caused such distortion. In the case of an inhomogeneous environment, however, the modes are expected to show a red-shift, because the bead penetrates into a higher index medium (as verified by the last spectrum at t=106 min). To get a first idea of the behaviour of the mode splitting and as further detailed in Example 2, the mode around 502 nm was fitted by means of two Lorentzian resonances for the entire series of spectra and the respective mode positions were plotted as a function of time as displayed in Fig. 10. Obviously, after 90 min, the mode is symmetric and can be described by a single resonance only.

Before that, however, the mode shows a clear splitting, with one of the resonances exhibiting a blue-shift, which cannot be explained by an inhomogeneous dielectric environment, since the aqueous medium has a lower index than the interior of the cell. Therefore, we conclude that the mode splitting observed is caused by a mechanical deformation of the bead as further analyzed in Example 3, which provides a calculation of the maximum stress exerted on the bead during its uptake by the cell.

In addition, as reference, the evolution of a mode around 495 nm of a bead that has not been internalized, is shown. To avoid bead uptake in this case, the HUVEC had been treated with cytochalisin D prior to bead exposure. Obviously, the mode position is constant throughout the entire experiment, thereby indicating that the splitting observed in the example above was not due to other reasons, such as insufficient stability of the bead in aqueous phase.

If the bead size becomes too large, which was in the present case at a size above 8 µm, the cell cannot incorporate the bead any longer. Fig. 11 displays WGM spectra of an attempt of an uptake of a PS bead of about 10 µm diameter by a HUVEC. As can be seen from the evolution of the spectra, the modes start to shift towards longer wavelengths and also begin to split, indicating a penetration of the cell membrane. After about 35-40 min, however, the process seems to reverse, i.e., the splitting disappears and the peaks move back to their former positions, indicating that the bead has left the cell and thus the attempt of incorporation was not successful. This observation is in agreement with the control experiments of Example 1, which show that beads of sizes above 8 µm have little chance of internalization into the HUVECs. The interesting observation here, however, is that the cells seem to try such incorporation anyway.

In an alternative, more sophisticated evaluation scheme of the WGM spectra of Fig. 7, which is detailed in Example 5, the average bead diameters of the bead and the average refractive indices of its ambient in the different stages of incorporation into the cell were obtained simultaneously as shown in Fig. 12. From these average values, in a second step, the maximum and minimum radii of the bead deformed by the cell (*cf.* Fig. 4b) were obtained (Fig. 12b/c), which then were used for calculation of the forces exerted on the bead by the cellular cytoskeleton. In addition to the improved WGM analysis, also the mechanical model of bead deformation was refined by taking into account the elastic properties of the thin adsorption layer on the bead surface consistent of a PE film and subsequently adsorbed serum proteins of the endothelial cell growth medium. The thickness of this thin layer had been determined in independent experiments. That way, one inconsistency in the results of the simplified evaluation scheme presented in Example 3 could be resolved: The stress calculation in Example 3 gives negative values for in-plane and out-of-plane contributions, which means that the bead is compressed in all directions. In such case, however, it is unlikely that the bead penetrates into the cell, but is repelled and pushed away from it. The reason for this inconsistency is most likely that the mechanical model used in Example 3 does not account for the thin adsorption layer, which is supposedly stronger compressed than the core of the particle because of its smaller E-modulus (for details, see Example 5). Accordingly, even if the core of the bead is expanding in the out-of-plane direction, i.e., in perpendicular direction to the cell membrane, because of its non-zero Poisson ratio, the total microresonator size, i.e., bead plus adsorption layer, may shrink. Accordingly, the results of Example 5 give a positive stress in the out-of-plane direction and a negative stress only in the in-plane direction, which means that the bead is pulled into the cell by the cytoskeletal machinery, while it is compressed in the plane of the cell membrane. Such combined pulling-compressing action of the cell is not unlikely, since a compression would reduce the bead's cross-section in the plane of the cell membrane and thus facilitate the cell's efforts to incorporate the bead. In this sense, the mechanical model applied in Example 5 seems to be better suited for the description of the entire process, while Example 3 points out the limitations of the simplified approach.

The examples given above focus on the study and analysis of individual cells and their close vicinity. It becomes obvious, however, that the techniques presented here may also be used to study biological materials, such as aggregates of cells and tissue on a more general level. The following examples are not to be regarded as embodiments of the present invention unless a microresonator is disposed into a live biological cell. Therefore, examples wherein a microresonator is disposed into tissue, extracellular matrix or body fluids do not describe part of the claimed invention. For example, instead of transmigrating into a cell, a microresonator or cluster of optical cavities or microresonators (for the sake of brevity, we will call a microresonator or cluster of optical cavities or microresonators "the sensor" in the following) may penetrate into the space between adjacent cells, such as cellular junctions, e.g., to interrogate the strength of their adhesion and/or the presence of signaling or other kinds of molecules in the same way as described above for individual cells, i.e., by deformation, by changes of the dielectric properties of the sensor or the ambient, and also by changes in the number, kind, and/or density of adsorbed species at the sensor. Such location of sensor migration may be part of the extracellular matrix and/or the tissue in general. The ways of sensing biochemical and/or biomechanical properties (or changes thereof) of the biological material under study are essentially the same as described above. For example, clusters of optical cavities or microresonators may form from single microresonators in the course of a sensing process between cells, in the extracellular matrix, and/or the tissue in general in the same fashion as described above for intracellular sensing. In another embodiment, the sensor(s) might freely float in a biological liquid, such as saliva, blood, lymph, urine, or other body fluids and then attach via suitable signaling molecules and/or receptors to a wanted biological material where it is (they are) used for sensing of biochemical and/or biomechanical properties or changes thereof. Also here, clusters may form from single microresonators or smaller clusters in the course of the process. Soft sensors, i.e., sensors with a suitable E-modulus, may also be applied to the study of rheological forces within liquid flows, e.g., in blood vessels, for example to detect distortions or defects. Other embodiments as described above may be transcribed accordingly.

One important aspect of the present embodiments/examples is that the sensors applied are essentially free to travel, i.e., that they are remote sensors, which enables their penetration into biological materials, such as biological tissue, biological fluids, and/or biological cells. To account for this particular property, we will use the terms "penetrating into a biological material" or "disposing into a biological material" to refer to remote sensors that may be - in principle, i.e., due to their mode of operation - entirely engulfed by the biological material under study. This does not mean, however, that such complete engulfment will always happen. Examples of complete and incomplete engulfment are given in Examples 3 and 5 with Figs. 7 and 11, where it is shown that a spherical microresonator may be incorporated by a live endothelial cell, if the bead diameter does not exceed 8 µm. Incomplete engulfment occurs, in contrast, when the bead diameter is larger, e.g., about 10 µm as in the present example. In this sense, the sensors of the present embodiments differ from all those sensors that may not be remotely operated, for example because they are supported by a substrate or apply an optical coupler for their operation and thus cannot be entirely engulfed from a fundamental point of view. In an alternative view one can say that a remote sensor travels or migrates to the place of action, i.e., to the location of the biochemical and/or biomechanical process of a biological material to be sensed in its natural environment, while other sensors wait for their targets to travel out of this natural environment towards the fixed location of the sensor. In this sense, a biochemical and/or biomechanical process of a biological material must be distinguished from those biochemical and/or biomechanical processes that may potentially occur in the course of the sensor's sensing process. For example, a sensor may be functionalized with molecules to promote specific binding interactions. In such case, the interaction between the molecules with their targets are not part of the biochemical and/or biomechanical process of the biological material to be analyzed, but serve simply as an assistive tool in the study of the biological material. More generally speaking, the biochemical and/or biomechanical processes of a biological material as they are the target of the present embodiments will occur basically also in absence of the sensor. This does not mean, however, that the sensor cannot induce or promote such processes in the course of its mission, e.g., due to its particular functionalization and condition. Further, the term "process" includes also states or conditions of the biological material under study. For example, the intercellular adhesion strength between two adherent cells may be measured by the process of a penetrating sensor into the interfacial region between the two cells. Nevertheless, the static adhesion strength at rest may still be obtained from the analysis of such process.

This characteristic of remote sensing has implications for the way of the sensors' operation, in particular in view of excitation of their optical cavity modes. Evanescent field coupling by means of an optical coupler, such as an optical fiber, waveguide, or prism, seems not feasible not only because of the dimension of the coupler, which is typically not microscopic in size, but also because of the high precision, by which the coupler/sensor distance needs to be kept constant. As pointed out by Guo et al. (Z. Guo et al., J. Phys. D Vol. 39, 5133-5136, 2006), even minute changes in the nanometer-scale gap between coupler and sensor may affect the sensor signal. In particular when sensing biomechanical forces or when penetrating into tissue, such minute changes in the gap size cannot be excluded even in the case that the gap consists of a solid material (J. Lutti et al., Appl. Phys. Lett. Vol. 93, pp. 151103/1-3, 2008), because of the latter's elasticity. Therefore, optical cavity mode sensors based on evanescent field couplers are not suited for implementation of the present embodiments. One exception may be related to coupling via a focused, freely propagating light beam (i.e., without use of a physical coupler), where the electromagnetic fields exponentially decaying from the center of the focus may be utilized for optical cavity mode excitation in a similar fashion to the evanescent fields of the physical couplers decribed above. However, due to the lack of a physical object in vicinity of the sensor, the optical cavity modes are less affected by changes in the distance between focus and sensor. Mostly, the coupling efficiency will be afflicted by such instabilities. Since many modern instruments for cell and tissue inspection, such as confocal microscopes, Raman microscopes, or plate readers, utilize focused laser beams, such excitation may be feasible and convenient. The only problem may be to match the excitation light source, such as the confocal laser, to an optical cavity mode. This can be achieved, however, e.g., by utilization of short pulse lasers for excitation, which can exhibit a significant emission bandwidth of several to few tens of nanometers. Alternatively, other kinds broadband light sources, such as LEDs or thermal sources may be applied.

Nevertheless, the most straightforward and simplest way of optical cavity mode excitation in remote sensors is to apply a fluorescent material, which can be excited by many kinds of suitable light sources and then emits - basically regardless of the way of excitation - at a different wavelength or a different wavelength range, which can be tailored by suitable choice of the fluorescent material(s) in such way, that the wanted regime of optical cavity mode excitation is covered and operated in the desired way (e.g. below or above the lasing threshold of the sensor).

Some authors reported of fluorescence excitation of whispering gallery modes in microdisks for sensing applications (Z. Zhang et al., Appl. Phys. Lett., Vol. 90, pp. 111119/1-3, 2007; W. Fang et al., Appl. Phys. Lett., Vol. 85, pp. 3666-3668, 2004). While such structures utilize basically a remote excitation and detection scheme for their optical cavity modes, they are essentially not remote sensors in the sense of the present embodiments due to the disk-shape of their cavities, which requires a fixation of the resonator on a solid support. Because of its unfavorable surface-to-volume ratio and accordingly, the dominance of surface interactions, a microdisk freely floating in a medium is very likely to stick with one of its two large circular surfaces to any surface it comes into contact with and then becomes immobile due to expectely large surface adhesion and friction forces. This, however, jeopardizes an application of the disks as remote sensors penetrating into a biological material as defined above.

In the examples given below, the fluorescent material is incorporated into the core of the sensor. This was basically for convenience, due to the potential of using the sensor at a basically arbitrary location, and also to protect the live cells studied from a potential influence of the fluorescent material. It should be noted, however, that the fluorescent material may also be located on the surface of the sensor, incorporated into or be on the surface of its shell or any other kind of coating applied to the sensor. It may migrate or penetrate to or into any of these locations also in the course of a sensing process. Further, the fluorescent material might not target the sensor, but may be accumulated by the biological material studied, such as the cell(s), cell membrane, intracellular object(s), extracellular matrix, tissue, and/or body fluid(s), and then excite optical cavity modes of the sensor(s) once it (they) come into its close vicinity. For example, a fluorescently labeled antibody may target a intracellular or extracellular protein and thus accumulate at locations that show a high concentration of that protein. In that case, a sensor coming close to that location will experience cavity mode excitations if the fluorescent labels are stimulated in a suitable fashion (and the fluorescent labels and/or sensor(s) were chosen suitably). Then, the sensor may be used for sensing of any suitable biochemical and/or biomechanical process of the biological material in vicinity of the location of high concentration of the labeled protein. A proof that fluorescent excitation in the ambient of the sensor is sufficient for excitation of its optical cavity modes has been given by Fujiwara and Sasaki (Jpn. J. Appl. Phys. Vol. 38, pp. 5101-5104, 1999), who demonstrated optical cavity mode lasing in non-fluorescently labeled microresonators surrounded by an organic dye-containing aqueous solution.

### MATERIALS SECTION

The microresonators and/or clusters of optical cavities or microresonators of the present embodiments can be manufactured by using materials, which are available to the public. The following explanations of the materials are provided to help those skilled in the art construct the microresonators and clusters of optical cavities or microresonators in line with the description of the present specification.

*Cavity (core) material:* Materials that can be chosen for fabrication of the cavity (core) are those, which exhibit low absorption in that part of the electromagnetic spectrum, in which the cavity shall be operated. For example, for fluorescence excitation of the cavity modes, this is a region of the emission spectrum of the fluorescent material chosen for operation of the cavity. Typical materials are polymer latexes, such as polystyrene, polymethylmethacrylate, polymelamine and the like, and inorganic materials, such different kinds of glasses, silica, titania, salts, semiconductors, and the like. Also core-shell structures and combinations of different materials, such as organic/inorganic or inorganic/organic, organic/organic, and inorganic/inorganic, are feasible. In the case of clusters of optical cavities or microresonators or that more than a single microresonator is used in an experiment, the different optical cavities involved (either constituting the cluster or those of the different single microresonators) may be made from different materials and also may be optionally doped with different fluorescent materials, e.g., to allow their selective excitation. Also, the cavity (cavities) may consist of heterogeneous materials. In one embodiment, the cavity (cavities) is (are) made from semiconductor quantum well structures, such as InGaP/InGaAIP quantum well structures, which can be simultaneously used as cavity material and as fluorescent material, when pumped with suitable radiation. The typical high refractive index of semiconductor quantum well structures of about 3 and above further facilitates the miniaturization of the cavity or cavities because of the wavelength reduction inside of the semiconductor compared to the corresponding vacuum wavelength. In general, it is advantageous to choose a cavity material of high refractive index, such as a semiconductor, to facilitate miniaturization of the cavity or cavities. It is also possible to choose a photonic crystal as cavity material and to coat either the outer surface of the crystal with a fluorescent material, or to embed the fluorescent material into the crystal in a homogeneous or heterogeneous fashion. A photonic crystal can restrict the number of excitable cavity modes, enforce the population in allowed modes, and define the polarization of the allowed modes. The kind of distribution of the fluorescent material throughout the photonic crystal can further help to excite only the wanted modes, while unwanted modes are suppressed due to improper optical pumping.

An example of photonic crystals comprising two or three-dimensional non-metallic periodic structures that do not allow the propagation of light within a certain frequency range, the so-called "bandgap" of the photonic crystal, was shown by E. Yablonovitch (Scientific American, Dec. issue, pp. 47-55, 2001). The light is hindered from propagation by distributed Bragg diffraction at the periodic non-metallic structure, which causes destructive interference of the differently scattered photons. If the periodicity of such a photonic crystal is distorted by a point defect, e.g., one missing scattering center in the overall periodic structure, spatially confined allowed optical modes within the bandgap may occur, similar to those localized electronic energy levels occurring within the bandgap of doped semiconductors.

In the present embodiment, the optical cavities shown have a spherical shape. Although such spherical shape is a very useful one, the cavity may in principle have any shape, such as oblate spherical shape, cylindrical, or polygonal shape given that the cavity can support cavity modes, as shown in the related art. The shape may also restrict the excitation of modes into a single or a countable number of planes within the cavity volume.

*Fluorescent material:* As fluorescent material, any type of material can be used that absorbs light at an excitation wavelength *λ_{exc}*, and re-emits light subsequently at an emission wavelength *λₑₘ≠*λ*_{exc}*. Thereby, at least one part of the emission wavelength range(s) should be located within the mode spectrum of the cavity for whose excitation the fluorescent material shall be used. In practice, fluorescent dyes, semiconductors (e.g., ZnO), semiconductor quantum dots, semiconductor quantum well structures, carbon nanotubes (J. Crochet et al., Journal of the American Chemical Society, 129, pp. 8058-9, 2007), Raman emitters, and the like can be utilized. A Raman emitter is a material that uses the absorbed photon energy partially for excitation of internal vibrational modes and re-emits light with a wavelength higher than that of the exciting light. If a vibration is already excited, the emitted light may also have a smaller wavelength than the incoming excitation, thereby quenching the vibration (anti-Stokes emission). In any case, by proper choice of the excitation wavelength many non-metallic materials may show Raman emission, so that also the cavity materials as described above can be used for Raman emission without addition of a particular fluorescent material.

Examples of the fluorescent dyes which can be used in the present embodiments are shown together with their respective peak emission wavelength (unit: nm): PTP (343), DMQ (360), butyl-PBD (363), RDC 360 (360), RDC 360-NEU (355), RDC 370 (370), RDC 376 (376), RDC 388 (388), RDC 389 (389), RDC 390 (390), QUI (390), BBD (378), PBBO (390), Stilbene 3 (428), Coumarin 2 (451), Coumarin 102 (480), RDC 480 (480/470), Coumarin 307 (500), Coumarin 334 (528), Coumarin 153 (544), RDC 550 (550), Rhodamine 6G (580), Rhodamine B (503/610), Rhodamine 101 (620), DCM (655/640), RDC 650 (665), Pyridin 1 (712/695), Pyridin 2 (740/720), Rhodamine 800 (810/798), and Styryl 9 (850/830). All these dyes can be excited in the UV (e.g., at 320nm) and emit above 320nm, e.g., around 450 nm, e.g., in order to operate silver-coated microresonators (cf. e.g., WO 2007129682).

However, for microresonators which are not coated with a silver shell, any other dye operating in the UV-NIR regime could be used. Examples of such fluorescent dyes are shown: DMQ, QUI, TBS, DMT, p-Terphenyl, TMQ, BPBD-365, PBD, PPO, p-Quaterphenyl, Exalite 377E, Exalite 392E, Exalite 400E, Exalite 348, Exalite 351, Exalite 360, Exalite 376, Exalite 384, Exalite 389, Exalite 392A, Exalite 398, Exalite 404, Exalite 411, Exalite 416, Exalite 417, Exalite 428, BBO, LD 390, α-NPO, PBBO, DPS, POPOP, Bis-MSB, Stilbene 420, LD 423, LD 425, Carbostyryl 165, Coumarin 440, Coumarin 445, Coumarin 450, Coumarin 456, Coumarin 460, Coumarin 461, LD 466, LD 473, Coumarin 478, Coumarin 480, Coumarin 481, Coumarin 485, Coumarin 487, LD 489, Coumarin 490, LD 490, Coumarin 498, Coumarin 500, Coumarin 503, Coumarin 504 (Coumarin 314), Coumarin 504T (Coumarin 314T), Coumarin 510, Coumarin 515, Coumarin 519, Coumarin 521, Coumarin 521T, Coumarin 522B, Coumarin 523, Coumarin 525, Coumarin 535, Coumarin 540, Coumarin 6, Coumarin 6 Laser Grade, Coumarin 540A, Coumarin 545, Pyrromethene 546, Pyrromethene 556, Pyrromethene 567, Pyrromethene 567A, Pyrromethene 580, Pyrromethene 597, Pyrromethene 597-8C9, Pyrromethene 605, Pyrromethene 650, Fluorescein 548, Disodium Fluorescein, Fluorol 555, Rhodamine 3B Perchlorate, Rhodamine 560 Chloride, Rhodamine 560 Perchlorate, Rhodamine 575, Rhodamine 19 Perchlorate, Rhodamine 590 Chloride, Rhodamine 590 Tetrafluoroborate, Rhodamine 590 Perchlorate, Rhodamine 610 Chloride, Rhodamine 610 Tetrafluoroborate, Rhodamine 610 Perchlorate, Kiton Red 620, Rhodamine 640 Perchlorate, Sulforhodamine 640, DODC Iodide, DCM, DCM Special, LD 688, LDS 698, LDS 720, LDS 722, LDS 730, LDS 750, LDS 751, LDS 759, LDS 765, LDS 798, LDS 821, LDS 867, Styryl 15, LDS 925, LDS 950, Phenoxazone 660, Cresyl Violet 670 Perchlorate, Nile Blue 690 Perchlorate, Nile red, LD 690 Perchlorate, LD 700 Perchlorate, Oxazine 720 Perchlorate, Oxazine 725 Perchlorate, HIDC Iodide, Oxazine 750 Perchlorate, LD 800, DOTC Iodide, DOTC Perchlorate, HITC Perchlorate, HITC Iodide, DTTC Iodide, IR-144, IR-125, IR-143, IR-140, IR-26, DNTPC Perchlorate, DNDTPC Perchlorate, DNXTPC Perchlorate, DMOTC, PTP, Butyl-PBD, Exalite 398, RDC 387, BiBuQ Stilbene 3, Coumarin 120, Coumarin 47, Coumarin 102, Coumarin 307, Coumarin 152, Coumarin 153, Fluorescein 27, Rhodamine 6G, Rhodamine B, Sulforhodamine B, DCM/Pyridine 1, RDC 650, Pyridine 1, Pyridine 2, Styryl 7, Styryl 8, Styryl 9, Alexa Fluor 350 Dye, Alexa Fluor 405 Dye, Alexa Fluor 430 Dye, Alexa Fluor 488 Dye, Alexa Fluor 500 and Alexa Fluor 514 Dyes, Alexa Fluor 532 Dye, Alexa Fluor 546 Dye, Alexa Fluor 555 Dye, Alexa Fluor 568 Dye, Alexa Fluor 594 Dye, Alexa Fluor 610 Dye, Alexa Fluor 633 Dye, Alexa Fluor 647 Dye, Alexa Fluor 660 Dye, Alexa Fluor 680 Dye, Alexa Fluor 700 Dye, and Alexa Fluor 750 Dye.

Combinations of different dyes may be used, for example with at least partially overlapping emission and excitation regimes, for example to widen, tailor, or shift the operation wavelength regime(s) of the optical cavities or microresonator(s).

Water-insoluble dyes, such as most laser dyes, are particularly useful for incorporation into the optical cavities or microresonators, while water-soluble dyes, such as the dyes obtainable from invitrogen (Invitrogen Corp., Carlsbad, CA), are useful for staining the cell or biological material in general or the ambient of the optical cavities or microresonators.

Semiconductor quantum dots that can be used as fluorescent materials for doping the microresonators have been described by Woggon and coworkers (M. V. Artemyev & U. Woggon, Applied Physics Letters 76, pp. 1353-1355, 2000; M. V. Artemyev et al., Nano Letters 1, pp. 309-314, 2001). Thereby, quantum dots (CdSe, CdSe/ZnS, CdS, CdTe for example) can be applied to the present embodiments in a similar manner as described by Kuwata-Gonokami and coworkers (M. Kuwata-Gonokami et al., Jpn. J. Appl. Phys. Vol. 31, pp. L99-L101, 1992), who have shown that the fluorescence emission of dye molecules can be utilized for population of microresonator cavity modes. The major advantage of quantum dots over dye molecules is their higher stability against degradation, such as bleaching. The same argument holds for semiconductor quantum well structures, e.g., made from InGaP/InGaAIP, which exhibit high stability against bleaching and cannot only be used as fluorescent material but also as cavity material. Also semiconductors in other form, such as particulates, films, coatings, and/or shells (W. Fang et al., Appl. Phys. Lett., Vol. 85, pp. 3666-3668, 2004)may be applied as fluorescent material(s) at suited locations of core and/or shell of the microresonator(s).

The excitation wavelength *λ_{exc}* of the fluorescent material does not have necessarily to be smaller than its emission wavelength *λₑₘ*, i.e., λₑₓₒ < λₑₘ, since one also can imagine multiphoton processes, where two or more photons of a given energy have to be absorbed by the material before a photon of twice or higher energy will be emitted. Processes of this kind can be two-photon (or multiple photon) absorption or nonlinear optical processes, such as second-harmonic, third-harmonic, or higher-harmonic generation. Also, as mentioned above, Raman anti-Stokes processes might be used for similar purpose.

Combinations of different fluorescent materials, such as those exemplified above, may be used, for example to widen, tailor, or shift the operation wavelength regime(s) of the optical cavity (cavities) or microresonator(s). This may be achieved, for example, by suitable combination of excitation and emission wavelength regimes of the different fluorescent materials applied. In general, the fluorescent material can be incorporated into the cavity material, adsorbed on its surface, be embedded or adsorbed to the optional shell of the optical cavity, and/or brought into its ambient, such as a cell or a biological material in general. The distribution can be used to select the type of cavity modes that are excited. For example, if the fluorescent material is concentrated in vicinity of the surface of a suitable optical cavity, whispering gallery modes are more likely to be excited than Fabry Perot modes. If the fluorescent material is concentrated in the center of the optical cavity, Fabry Perot modes are easier to excite (A. Weller & M. Himmelhaus, Appl. Phys. Lett., Vol. 89, pp. 241105/1-3, 2006). Other examples of a heterogeneous distribution are those, in which the fluorescent material is distributed in an ordered fashion, i.e., in terms of regular two- or three-dimensional patterns of volumes with a high concentration of the fluorescent material. In such a case, diffraction effects may occur, which help to excite the cavity in distinct directions, polarizations, and/or modes, e.g., similar to those found in distributed feedback lasers.

*Shell:* The optical cavities and/or the clusters of optical cavities or microresonators might be embedded in a shell which might have a homogeneous thickness and/or composition or not. The shell may consist of any material (metal, dielectric, semiconductor) that shows sufficient transmission at the excitation wavelength *λ_{exc}* of the fluorescent material(s) of the core(s). Also, the shell may consist of different materials with wanted properties, for example to render the surface of microresonator(s) and/or cluster(s) of microresonators transparent only at wanted locations and/or areas, to bear the fluorescent material, or - to give another example - to facilitate selective (bio-)functionalization. For example, when applying semiconductors as shell materials, the shell becomes transparent when the excitation wavelength is higher than the wavelength corresponding to the bandgap of the considered semiconductor. For a metal, high transparency may be achieved, for example, by taking advantage of the plasma frequency of the metal, above which the conduction electrons of the metal typically do no longer contribute to the absorption of electromagnetic radiation. Among useful metals are aluminum and transition metals, such as silver, gold, titanium, chromium, cobalt and the like. The shell can be continuous, as fabricated for example via evaporation or sputtering, or contiguous as often achieved by means of colloidal metal particle deposition and subsequent electroless plating (Braun & Natan, Langmuir 14, pp. 726-728, 1998; Ji et al., Advanced Materials 13, pp. 1253-1256, 2001; Kaltenpoth et al., Advanced Materials 15, pp. 1113-1118, 2003). Also, the thickness of the shell may vary from few nanometers to several hundreds of nanometers. The only stringent requirement is that the reflectivity of the shell is sufficiently high in the wanted spectral range to allow for Q-factors with values of Q > 1. For FPM in spherical cavities, the Q-factor can be calculated from the reflectance of the shell 4 (or vice versa) by the formula $Q = \frac{{λ}_{m}}{Δ {λ}_{m}} = m π \frac{\sqrt{{R}_{sh}}}{1 - {R}_{sh}} ,$ (5) where *Rₛₕ* is the reflectance of the shell and *λₘ* the wavelength of cavity mode m.

*Biofunctional coating*: The microresonator(s) or clusters of optical cavities or microresonators may be coated with a (bio-)biofunctional coating facilitating their (bio-)mechanical and/or (bio-)chemical function. For example, they may be functionalized with specific analytes to initiate a wanted response of a cell or biological material in general, or to facilitate biomechanical and/or biochemical sensing. For sake of brevity, the microresonators or clusters of optical cavities or microresonators will be called "the sensor" in the following.

To render the sensor selective for specific analytes, it is preferred to coat the sensor surface with coupling agents that are capable of (preferably reversibly) binding an analyte, such as proteins, peptides, and nucleic acids. Methods for conjugating coupling agents are well-known to those skilled in the art for various kinds of surfaces, such as polymers, inorganic materials (e.g., silica, glass, titania) and metal surfaces, and are equally suitable for derivatizing the sensor surface of the present embodiments. For example, in the case of a transition metal-coating (e.g., gold, silver, copper, and/or an alloy and/or composition thereof), the sensor of the present embodiments can be chemically modified by using thiol chemistries. For example, the metal-coated non-metallic cores can be suspended in a solution of thiol molecules having an amino group such as aminoethanethiol so as to modify the sensor surface with an amino group. Next, biotin modified with N-hydroxysuccinimide suspended in a buffer solution of pH 7 - 9 can be activated by EDC, and added to the sensor suspension previously modified by an amino group. As a result, an amide bond is formed so as to modify the metal-coated non-metallic cores with biotin. Next, avidin or streptavidin comprising four binding sites can be bound to the biotin. Next, any biotin-derivatized biological molecule such as protein, peptide, DNA or any other ligand can be bound to the surface of the avidin-modified metal-coated non-metallic cores.

Alternatively, amino-terminated surfaces may be reacted with an aqueous glutardialdehyde solution. After washing the sensor suspension with water, it is exposed to an aqueous solution of proteins or peptides, facilitating covalent coupling of the biomolecules via their amino groups (R. Dahint et al., Anal. Chem., 1994, 66, 2888-2892). If the sensor is first carboxy-terminated, e.g., by exposure to an ethanolic solution of mercaptoundecanoic acid, the terminal functional groups can be activated with an aqueous solution of EDC and N-hydroxysuccinimide. Finally, proteins or peptides are covalently linked to the activated surface via their amino groups from aqueous solution (Herrwerth et al., Langmuir 2003, 19, 1880-1887).

In a similar fashion, also non-metallic sensors can be specifically functionalized. For example, polyelectrolytes (PE), such as PSS, PAA, and PAH, can be used as described in the literature (G. Decher, Science Vol. 277, pp. 1232ff., 1997; M. Lösche et al., Macromol. Vol. 31, pp. 8893ff., 1998) to achieve a sensor surface comprising a high density of chemical functionalities, such as amino (PAH) or carboxylic (PAA) groups (this technique is also applicable to metal-coated sensors). Then, for example the same coupling chemistries as described above can be applied to these PE coated sensors. Alternatively, and in analogy to the thiol chemistry described above for functionalization of metal surfaces, suitable kinds of coupling agents, such as amino-, mercapto-, hydroxy-, or carboxy-terminated siloxanes, phosphates, amines, carboxylic or hydroxamic acids, and the like, can be utilized for chemical functionalization of the sensor surface, on which basis then coupling of biomolecules can be achieved as described in the examples above. Suitable surface chemistries can be found in the literature (e.g., A. Ulman, Chem. Rev. Vol. 96, pp. 1533-1554, 1996).

A general problem in controlling and identifying biospecific interactions at surfaces and particles is non-specific adsorption. Common techniques to overcome this obstacle are based on exposing the functionalized surfaces to other, strongly adhering biomolecules in order to block non-specific adsorption sites (e.g., to BSA). However, the efficiency of this approach depends on the biological system under study and exchange processes may occur between dissolved and surface bound species. Moreover, the removal of non-specifically adsorbed biomolecules may require copious washing steps, thus, preventing the identification of specific binding events with low affinity.

A solution to this problem is the integration of the coupling agents into inert materials, such as coatings of poly- (PEG) and oligo(ethylene glycol) (OEG). The most common technique to integrate biospecific recognition elements into OEG-terminated coatings is based on co-adsorption from binary solutions, composed of protein resistant EG molecules and a second, functionalized molecular species suitable for coupling agent coupling (or containing the coupling agent itself). Alternatively, also direct coupling of coupling agent to surface-grafted end-functionalized PEG molecules has been reported.

Recently, a COOH-functionalized poly(ethylene glycol) alkanethiol has been synthesized, which forms densely-packed monolayers on gold surfaces. After covalent coupling of biospecific receptors, the coatings effectively suppress non-specific interactions while exhibiting high specific recognition (Herrwerth et al., Langmuir 2003, 19, pp. 1880-1887).

The binding entities immobilized at the surface may be proteins such as antibodies, (oligo-)peptides, oligonucleotides and/or DNA segments (which hybridize to a specific target oligonucleotide or DNA, e.g., a specific sequence range of a gene, which may contain a single nucleotide polymorphism (SNP), or carbohydrates). To reduce non-specific interactions, the binding entities will preferably be integrated in inert matrix materials.

*Position control functionality:* The sensors of the present embodiments are remote sensors and therefore may require control of their positions and/or movements by external means, for example to control their contact and/or interaction with a selected cell or part of a biological material in general. Such control may be achieved by different means. For instance, the sensors may be rendered magnetic and magnetic or electromagnetic forces may be applied to direct the sensor(s) (C. Liu et al., Appl. Phys. Lett. Vol. 90, pp. 184109/1-3, 2007). For example, paramagnetic and super-paramagnetic polymer latex particles containing magnetic materials, such as iron compounds, are commercially available from different sources (e.g., DynaBeads, Invitrogen Corp., or BioMag/ProMag microspheres, Polysciences, Warrington, PA). Because the magnetic material is embedded into a polymeric matrix material, which is typically made of polystyrene, such particles may be utilized in the same or a similar way as optical cavity mode sensors as the non-magnetic PS beads described in the examples below. Alternatively or in addition, a magnetic material/functionality may be borne by the shell of the microresonator(s) and/or their (bio-)functional coating.

Further, the position control may be mediated by means of optical tweezers (J. R. Moffitt et al., Annu. Rev. Biochem. Vol. 77, pp. 205-228, 2008). In such case, the laser wavelength(s) of the optical tweezers may be either chosen such that it does or that it does not coincide with excitation and/or emission wavelength range(s) of the fluorescent material(s) used to operate the sensor. For example, it might be desirable to use the optical tweezers' operating wavelength also for (selective) excitation of (one of) the fluorescent material(s). One advantage of optical tweezers over magnetic tweezers would be that a number of different sensors may be controlled individually at the same time (C. Mio et al., Rev. Sci. Instr. Vol. 71, pp. 2196-2200, 2000).

In other schemes, position and/or motion of the sensors may be controlled by acoustic waves (M. K. Tan et al., Lab Chip Vol. 7, pp. 618-625, 2007), (di)electrophoresis (S. S. Dukhin and B. V. Derjaguin, "Electrokinetic Phenomena", John Wiley & Sons, New York, 1974; H. Morgan and N. Green, "AC Electrokinetics: colloids and nanoparticles", Research Studies Press, Baldock, 2003; H. A. Pohl, J. Appl. Phys. Vol. 22, pp. 869-671, 1951), electrowetting (Y. Zhao and S. Cho, Lab Chip Vol. 6, pp. 137-144, 2006), and/or by a microfluidics device that potentially may also be capable of sorting/picking particles and/or cells of desired dimension and/or function (S. Hardt, F. Schönfeld, eds., "Microfluidic Technologies for Miniaturized Analysis Systems", Springer, New York, 2007).

Also mechanical tweezers may be utilized for position control of the sensor(s), for example by employing a microcapillary capable of fixing and releasing a particle via application of pressure differences (M. Herant et al., J. Cell Sci. Vol. 118, pp. 1789-1797, 2005). The beauty of this approach is that sensors and cells or biological materials in general may be manipulated using the same instrumentation (*cf.* M. Herant et al., 2005). Also combinations of two or more of the schemes described above may be suitable for position control of sensor(s) and/or cell(s) or biological material(s) in general.

*Excitation light source*: The choice of a light source for optical cavity mode excitation depends on the excitation scheme applied. For excitation via evanescent field coupling via an optical coupler or a focused light beam (see e.g., Oraevsky, Quant. Electron. Vol. 32, pp. 377-400, 2002), the emission wavelength range should match the wanted spectral regime of operation of the cavity. For excitation of the microresonator(s) or cluster(s) of microresonators via a fluorescent material as described above, a light source may be chosen such that its emission falls into (or partially overlaps with) the excitation frequency range *ω_{exc}* of the fluorescent material. In the case of utilization of multiphoton processes, such as multiple photon absorption or harmonic generation, for excitation of the fluorescent material, the emission frequency range of the light source may be chosen suitably in such way that the wanted multiphoton process falls into (or partially overlaps with) the excitation frequency range *ω_{exc}* of the fluorescent material. The emission power should be such that it can overcompensate the losses (radiation losses, damping, absorption, scattering) that may occur in the course of excitation of the microresonators. Irrespective of the excitation scheme, preferred light sources are thermal sources, such as tungsten and mercury lamps, and non-thermal sources, such as gas lasers, solid-state lasers, laser diodes, DFB lasers, and light emitting diodes (LEDs).

Lasers or high power light emitting diodes with their narrower emission profiles will be preferably applied to minimize heating of sample and environment. For same purpose, also short and ultrashort pulsed light sources may be exploited. The latter may also allow for pump-and-probe experiments or for use with lock-in techniques for optical cavity mode detection and analysis. Such short-pulsed light sources may be any of above mentioned light sources but now with a temporally modulated emission intensity profile, such as pulsed thermal lamps, pulsed LEDs or laser diodes, or pulsed lasers. Further, pulsed sources may be advantageously utilized to achieve lasing in microresonators or clusters of optical cavities or microresonators, because even at low average power of the light source, the peak power (intensity) within a pulse may exceed the lasing threshold (see, e.g., A. Francois & M. Himmelhaus, Appl. Phys. Lett. Vol. 94, pp. 031101/1-3, 2009).

Broadband light sources with a spectral emission over several nanometers or more may be particularly useful for evanescent field coupling to the microresonator(s) via a focused light beam (see e.g., Oraevsky, Quant. Electron. Vol. 32, pp. 377-400, 2002). In such case, the broad spectrum of the source may allow for simultaneous excitation of more than a single optical cavity mode of the respective microresonator(s). Such broadband sources may also be pulsed sources and can be combined, for example, with lock-in detection of optical cavity modes.

If several fluorescent materials are utilized with suitably chosen, e.g., nonoverlapping, excitation frequency ranges, more than a single light source or a single light source with switchable emission wavelength range may be chosen such that individual microresonators or clusters of optical cavities or microresonators may be addressed selectively, e.g., to further facilitate the readout process or for the purpose of reference measurements. Further, the excitation power of at least one of the light sources may be chosen such (under the respective conditions) that at least one of the microresonator(s) or clusters of microresonators utilized is/are operated - at least temporally - above the lasing threshold of at least one of the optical cavity modes excited. In such case, the bandwidth of the operating cavity modes will further narrow, thus improving their quality factor (M. Kuwata-Gonokami et al., Jpn. J. Appl. Phys. (Part 2) Vol. 31, pp. L99-101, 1992). This kind of operation will therefore further improve the sensitivity and reliability of the sensor.

*Analysis of Optical Cavity Modes (Detection system):* For collection of light scattered from the microresonator(s) or cluster(s) of optical cavities or microresonators any kind of suitable light collection optics known to those skilled in the art may be utilized. For example, the emission can be collected by a microscope objective of suitable numerical aperture and/or any other kind of suitable far-field optics, by an optical fiber, a waveguide structure, an integrated optics device, the aperture of a near field optical microscope (SNOM), or any suitable combination thereof. In particular, the collection optics may utilize far-field and/or near-field collection of the signal, e.g., by applying evanescent field coupling. Then, the collected light can be analyzed by any kind of suitable spectroscopic apparatus applying dispersive and/or interferometric elements or a combination thereof. For the sake of brevity, the entire system for analysis of optical cavity modes, including the light collection optics and the spectroscopic apparatus, will be called "detection system" in the following and may bear also other suitable parts, such as optical, optomechanical, and/or optoelectronic in nature. The most important feature of the detection system is to allow the determination of the wanted property (-ies) of the optical cavity modes, such as their frequencies, bandwidths, directions and kinds of propagation, polarizations, field strengths, phases, and/or intensities, or changes thereof at a precision, which is sufficient for the respective purpose(s). In the case of parallel processing of more than one microresonator or cluster of optical cavities or microresonators also more than one detection system may be utilized. Alternatively, a detection system able to process more than the emission of a single microresontor or cluster of optical cavities or microresonators simultaneously or in (fast) series may be applied. For example, confocal fluorescence microscopes combine fluorescence excitation via laser light with collection of the fluorescence emission with high numerical aperture, followed by filtering and spectral analysis of the fluorescence emission. Since such instruments are often used in cell studies, they may provide a convenient tool for implementation of the present embodiments. Other convenient instruments are, for example, Raman microscopes, which also combine laser excitation and high numerical aperture collection of light signals from microscopic sources with spectral analysis. Further, both kinds of instruments allow simultaneous spectral analysis and imaging, which facilitates tracing of the microresonator - target (such as a cell or biological materials in general) interaction. If such imaging information is not required, also other kinds of devices, such as fluorescence plate readers, may be applicable.

### EMBODIMENTS

### Embodiment 1: Optical sensor based on a single microresonator for cell sensing.

An optical biosensor including a single microresonator in the sense defined above is exposed to a cell. Before, during, and after (partial) incorporation of the microresonator by the cell, the cavity modes are frequently interrogated and recorded by means detailed above. By analysis of the cavity modes, for example with respect to their positions and bandwidths prior to incorporation, information about the biomechanical and/or biochemical condition(s) or process(es) of the cell may be obtained. Further, the microresonator may be coated with a biochemical coating to facilitate its incorporation, and/or to induce a wanted cell response, and/or to allow sensing of a biomolecule or biochemical process in vicinity of the cell, in or in vicinity of the cell membrane, and/or inside of the cell. The microresonator may be operated - at least temporally - above the lasing threshold of at least one of its operable optical cavity modes, e.g., to improve sensing (e.g., in terms of sensitivity or acquisition time) or to trigger a biomechanical or biochemical event in vicinity of the cell, in or in vicinity of the cell membrane, and/or inside of the cell.

Optical cavity mode excitation may be achieved by any suitable means, e.g., via focused light beams and/or by application of fluorescent material(s). The fluorescent material(s) may either be borne by the biosensor or by the cell under study. Also, it (they) may migrate either to or from the biosensor or the cell (e.g. from the biosensor's or the cell's environment) in the course of the sensing process. Analysis of optical cavity modes is typically achieved by collection of light scattered from the biosensor and subsequent analysis by means of a suitable detection system.

### Embodiment 2: Optical sensor based on more than a single microresonator for cell sensing.

In another embodiment of the present embodiments, more than a single microresonator may be used for cell sensing. For example, microresonators of different size, shape, core and optional shell materials, fluorescence excitation and/or emission regimes, and/or biochemical coatings may be used simultaneously and/or one after the other to obtain information about the biomechanical and/or biochemical condition of the cell by means detailed above. Thereby, some of the microresonators may undergo an internalization, while others may stay outside of the cell(s), depending on their respective function. Also, some of the optical cavities or microresonators may form clusters outside or inside of the cell(s) in the course of time. At least one of the optical cavities or microresonators may be operated above the lasing threshold of at least one of its operable optical cavity modes at least temporally.

Optical cavity mode excitation may be achieved by any suitable means, e.g., via focused light beams and/or by application of fluorescent material(s). Different microresonators may be operated in a different fashion with respect to excitation and analysis of their optical cavity modes, in particular they may be operated in different regimes of the electromagnetic spectrum. The fluorescent material(s) applied may either be borne by the microresonators or by the cell(s) under study. Also, it (they) may migrate either to or from the microresonators or the cell(s) (e.g. from the microresonators' or the cells' (-'s) environment) in the course of the sensing process. Analysis of optical cavity modes is typically achieved by collection of light scattered from the microresonators and subsequent analysis by means of a suitable detection system.

### Embodiment 3: Optical biosensor based on clusters of microresonators for cell sensing.

In another embodiment, one or more clusters of microresonators as exemplified in Fig. 1 may be used for cell sensing. Thereby, the clusters may be constituted from microresonators of same or of different type with respect to size, shape, core and optional shell materials, fluorescence excitation and/or emission regimes, and/or biochemical coatings. Some of the clusters may undergo an internalization, while other may stay outside of the cell(s), depending on their respective function. Also, single microresonator(s) and clusters may be used in a coordinated way, either simultaneously or subsequently in wanted sequences. Further the clusters may form from single microresonators or smaller clusters either inside or outside of the cell in the course of the sensing process. At least one of the microresonators or clusters or constituting microresonators may be used above the lasing threshold of at least one of their optical cavity modes at least temporally as detailed in embodiments 1 and 2 for single microresonators.

Optical cavity mode excitation may be achieved by any suitable means, e.g., via focused light beams and/or application of fluorescent material(s). The fluorescent material(s) may either be borne by the microresonators or clusters or by the cell(s) under study. Also, it (they) may migrate either to or from the microresonators or clusters or the cell(s) (e.g. from the microresonators' or clusters or the cells' (-'s) environment) in the course of the sensing process. Analysis of optical cavity modes is typically achieved by collection of light scattered from the biosensor and subsequent analysis by means of a suitable detection system.

### Embodiment 4: Single microresonators, assemblies of microresonators, or clusters of microresonators for photo-induced event triggering.

Besides optical sensing, the microresonators or clusters of optical cavities or microresonators may also be used for optically-induced event triggering, for example by initiating a photochemical process through optical cavity mode excitation or by heat transfer in the course of microresonator excitation and/or emission. For such purpose, it might be wanted to operate at least one of the microresonators or clusters of microresonators or constituent of a cluster of microresonators above the lasing threshold of one of its operable optical cavity modes, e.g., to induce such triggering. Such optically-induced event triggering may be used, among other applications, for drug release, control or initiation of biomechanical or biochemical processes and/or cell stimuli, tissue treatment and repair, and/or for control of cell death, e.g., in cancer treatment.

Optical cavity mode excitation may be achieved by any suitable means, e.g., via focused light beams and/or application of fluorescent material(s). The fluorescent material(s) may either be borne by the microresonator(s) or cluster(s) or by the biological material under study. Also, it (they) may migrate either to or from the microresonator(s) or cluster(s) or the biological material (e.g. from their respective environments) in the course of the sensing process. Analysis of optical cavity modes is typically achieved by collection of light scattered from the microresonator(s) or cluster(s) and subsequent analysis by means of a suitable detection system.

### EXAMPLES

### Example 1: Proof of Bead-Uptake by HUVECs via Fluorescence Labelling

The aim of this example is to verify that beads with diameters of up to about 8 µm can be completely incorporated into HUVECs and serves as a control for the cell sensing experiment performed label-free by means of whispering gallery mode optical sensing.

The experiment was performed such that PS beads of 6-10 µm nominal diameter were first labelled with biotin and then exposed to a layer of HUVECs grown in a plasma-treated cell culture dish. Cells and beads were left overnight (O/N) to allow sufficient time for the incorporation of the beads. Then, the culture was exposed to fluorescently labelled streptavidin as detailed in the experimental section below. As illustrated in Fig. 5, those beads that are not entirely integrated into a HUVEC 13 become labelled by specific binding of the streptavidin 14 to the biotin 16 on the bead surface, while those beads 1 that are incorporated into a cell 13 are shielded due to non-specific repulsion of the streptavidin 14 by the cell membrane. In a control experiment, the cytoskeleton of the cells was paralyzed by means of cytochalasin D to suppress bead-uptake. In such case, beads cannot penetrate into the cells and a high number of fluorescent beads is expected. For determination of the ratio of fluorescent to non-fluorescent beads, samples were analyzed by means of confocal fluorescence microscopy.

### Experimental

Labeling beads with biotin: A few drops of 6µm (#17141, Polysciences, Inc., Warrington, PA) and 10µm (#18133, Polysciences) carboxylate microspheres were added to PBS, 1% BSA in eppendorfs and left shaking for 1 hour. Beads were centrifuged (KUBOTA 3740, Kubota Co., Tokyo, Japan) at 10,000g for 10 minutes, the solution was discarded and the bead pellet was washed with 1ml PBS. 350ml of beads were put aside and kept as simply BSA labeled. The remaining 650ml of beads were labeled with biotin (B4501-500MG, Sigma-Aldrich Japan K. K., Tokyo, Japan) by amine coupling. This was achieved using an amine coupling kit (BR-1000-50, Biacore K. K., Tokyo, Japan): 395ml of a 1:1:1 solution of 1-ethyl-3-(3-dimethylaminopropyl)-carbodiimide hydrochloride (EDC): n-hydroxysuccinimide (NHS): biotin 1mg/ml. The beads were pipetted up and down and then left shaking for 20 min. After this time the beads were centrifuged at 10,000g for 10 min, the supernatant was removed and the reaction was neutralized by resuspending the beads in 1.0M ethanolamine-HCI pH 8.5 and left on the shaker for 10 min. The beads were again centrifuged at 10,000g for 10 min, the supernatant removed and the beads resuspended in 1ml of PBS. This last step was repeated once more.

Human Umbilical Vein Endothelial Cell culture: Human Umbilical Vein Endothelial Cells (HUVECs) (200-05n, Cell Applications, Inc., San Diego, CA) were kept at 37°C unless stated otherwise. HUVECs were cultured in Endothelial Cell Growth Medium (ECGM) (211500, Cell Applications, Inc.) with 5% CO₂ following the Cell Applications protocol.

Monitoring bead uptake by Human Umbilical Vein Endothelial Cells: Passage 2 to Passage 4 HUVECs were set up in a 6 well cell culture plate (Falcon 353046, BD, Franklin Lakes, NJ) at 5 x 10⁴ cells/well in 2.5 ml of ECGM. Cells were left with changes of the ECGM each day until the layer of cells was almost confluent. Either 25µl of Cytochalasin D (C8273-1MG, Sigma) at 1mg/ml or nothing was added to the cells in 2ml of ECGM in each well and left for two hours. After this time 5µl of 6-10 µm biotin labeled beads were added, and left overnight (O/N). The next day, 13µl of Streptavidin-rhodamine B (SRB) (1mg/ml in PBS) (S871, Invitrogen Japan, Tokyo, Japan) was added straight to half of the wells and left for 1 hour. The remaining half of the wells were scraped using a cell scraper and the cell suspension was collected and sonicated for 30 min, after which the suspension was added to a clean 6 well plate and SRB was added as described above ("sonicated cells"). The medium was removed and 2ml of ECGM was added to all wells as a wash and discarded followed by another 3ml of ECGM. The cells were then observed under a confocal microscope (Olympus Fluoview 1000, Olympus Co., Tokyo, Japan) using a 50x objective and a green HeNe laser (543 nm). Beads were now determined as either glooming or non-glooming depending on whether they appeared to fluoresce or not, respectively.

### Results

The experiment was performed twice with two independently grown HUVEC cultures to assure its reproducibility. Experiment 1 was performed with two different bead sizes, i.e., 6 µm and 10 µm diameter; experiment 2 was performed with a high number of control experiments to rule out any side effects using 6 µm beads. The results are listed in Table 1. The samples were studied by means of confocal fluorescence microscopy. All beads within an image were counted and evaluated independent whether they were close to a HUVEC or not. Experiments indicated by "*" in the Table 1 showed a weak and homogeneous fluorescent background only, but no other fluorescent spherical features.

**Table 1**

| Experiment No./bead size | Sample | Number of fluorescent beads | Total number of beads | Percentage of fluorescent beads (fluorescent/ total *100%) |
|---|---|---|---|---|
| 1/6 µm | Cells and beads, no inhibitor | 8 | 135 | 5.9% |
| | Cells and beads plus inhibitor | 98 | 100 | 98% |
| 1/10 µm | Cells and beads, no inhibitor | 50 | 60 | 83.3% |
| | Cells and beads plus inhibitor | 48 | 48 | 100% |
| | | | | |
| 2/6 um | Beads alone | 49 | 49 | 100% |
| | Sonicated beads | 184 | 184 | 100% |
| | Cells alone, no inhibitor*⁾ | 0 | 0 | 0% |
| | Cells alone, plus inhibitor*⁾ | 0 | 0 | 0% |
| | Cells and beads, no inhibitor | 60 | 199 | 30.2% |
| | Sonicated cells and beads, no inhibitor | 77 | 123 | 62.6% |
| | Cells and beads plus inhibitor | 195 | 196 | 99.5% |
| | Sonicated cells and beads plus inhibitor | 134 | 134 | 100% |

The results show very nicely that the HUVECs' cytoskeleton has to rearrange for the uptake of these large particles. Further, in absence of the inhibitor paralyzing the cytoskeleton a high percentage of beads penetrates into the cells. The variation in this percentage is not significant, since beads and cells are dispersed randomly in the medium. Therefore, not all beads are in vicinity of the cells and therefore not all of them are able to interact with the HUVECs. During evaluation of the experiment, however, all beads within an acquired image frame were evaluated to obtain a proper statistics. Therefore, also those obviously not in vicinity of a cell were counted, thus raising the percentage of fluorescent beads. These beads demonstrate, however, that the acquisition parameters had been chosen properly for visualization of fluorescent beads. As an example, Fig. 6 displays simultaneously acquired confocal fluorescent and transmission images for beads and cells with use of the inhibitor in Figs. 6(a) and (b) and without use of the inhibitor in Figs. 6(c) and (d). The position of the beads relative to the cells can be seen from the transmission images. With inhibitor (Figs. 6(a) and (b)) all beads show fluorescence independent of their position, while without use of the inhibitor (Figs. 6(c) and (d)), only one bead at the bottom of the image, which is obviously not in close contact with a cell, does show fluorescence. From this we conclude that all other beads in that image have entirely transmigrated into the HUVECs.

### Example 2: Whispering Gallery Mode Sensing of Bead Transmigration through the Cell Membrane of HUVECs

This experiment was performed to validate the potential of optical sensing in real time by means of whispering gallery mode excitations in microspheres during the transmigration and incorporation of the microsphere into a live cell.

### Experimental

All experiments were performed in a microfluidic flow cell made by molding a channel including inlet and outlet in polydimethylsiloxane (PDMS; Sylgard 184, Dow Corning Co., Midland, MI) and sealing its bottom by means of a glass cover slip (Matsunami Glass Ind., Ltd., Kishiwada, Japan). Once the flow cell had been sealed, the channel was coated with fibronectin (Sigma-Aldrich; 1.5 mg/ml in PBS) in order to improve cell adhesion. HUVEC cultures were grown as in Example 1. Flow cells filled with the HUVEC suspension were stored in an incubator for 2 hours prior to the experiment under the conditions described previously to allow the HUVEC to spread inside the channel. PS beads with nominal diameters between 6 and 10 µm were doped with Coumarin 6G by a method known to those skilled in the art. Then, the beads were transferred from aqueous suspension into the HUVEC growth medium by repeated centrifugation, removal of supernatant and replacement of the lost volume with the growth medium. It was found that the WGM spectra of beads treated in that way are not stable for about one hour, most probably due to adsorption of ingredients of the growth medium onto the beads' surface. After one hour, the spectra were stable and the beads could be used for the sensing experiment. Then the PS bead suspension was injected into the flow cell and acquisition of the WGM spectra of a single bead started as soon as a suitable bead, positioned in contact with a cell, was found. The WGM spectra were acquired repeatedly to monitor the uptake of the bead by the cell in the course of time.

### Results

Fig. 8 shows two image frames of a movie of a bead penetrating into a HUVEC taken by means of the confocal microscope in transmission mode. In image (a) the bead has just contacted the periphery of the cell. In image (b) it is internalized. The WGM spectra of such a process of bead internalization have been recorded in real time. Fig. 7 displays a series of WGM spectra taken after the indicated time intervals. The spectra show splitting of the different modes due to the break down of spherical symmetry during the process of bead internalization (*cf*. Figs. 4 and 9). This asymmetry can have its origin in heterogeneous optical properties of the bead's environment and/or mechanical stress exerted on the bead by the cell membrane and/or the cytoplasma.

While in this case, the bead internalization was successful, Fig. 11 gives an example of an unsuccessful penetration attempt. In this case, the bead size was about 10 µm. Initially, the modes show a minor splitting, which might arise from a slight deviation from spherical shape of the bead. In the course of time, the modes shift and the splitting changes due to the breakdown of symmetry during bead uptake. From a certain moment, however, the peaks move back to their former positions, thus giving evidence that the bead has left the cell. Most likely, the bead was too large for successful penetration into the HUVEC.

### Example 3: Calculation of Mechanical Stress During Bead Transmigration through the Cell Membrane of HUVECs

The mode splitting observed during bead transmigration as shown in Fig. 7 can be used for the calculation of the mechanical stress exerted by the cell on the bead during the process of penetration. For a first quantification of the mode splitting, the resonance around 497 nm was fitted with two Lorentzian profiles to yield the positions of the split modes. This worked reasonably well except for the 5 min-spectrum, where the different WGM have split into broad bands and thus fitting with only two Lorentzian profiles does not describe the very edges of these bands well. Nevertheless, also in this case the obtained somewhat averaged peak positions are good enough for a first discussion of the general behaviour of bead penetration.

As shown in Fig. 10, the mode splitting is largest in the early stage of the penetration process around 5 min from the start of the measurement. Although in principle, the splitting may arise from both mechanical stress and the heterogeneous environment of the bead, the fact that one of the modes shifts to lower wavelengths indicates that the main contribution of the splitting must arise from mechanical stress. This is because the interior of the cell has supposedly a higher refractive index than the cell's environment. Accordingly, a red-shift of the WGM as a cause of an increased index is expected. That this is so can be seen from the last spectrum of the series shown in Fig. 7 (after 106 min) which exhibits a clear red-shift, thus corroborating the assumption of a higher index inside of the cell as compared to the growth medium. One other explanation of a blue shift would be that during the process of membrane penetration, the bead loses some of the material adsorbed during its conditioning in the growth medium. In such case, however, it is expected that the bead shape remains asymmetric after internalization of the bead. As can be seen again from the last spectrum in the series of Fig. 7, such asymmetry cannot be observed, since the modes in this last spectrum are all symmetric without any evidence for splitting.

For determination of the maximum stress exerted by the cell onto the bead, we have a closer look at the spectrum taken after t = 5 min and compare it with the first spectrum, t = 0 min. At t = 5 min, all the formerly almost symmetric modes, which correspond to first order TE and TM mode excitations, have developed into bands that stretch over approximately 2 nm. This behavior can be explained by a deformation of the bead into a spheroid as sketched in Fig. 4, because in the case of an spheroidal shape all sizes between a maximum and a minimum diameter are present, thus causing the modes to widen into bands according to equation 3. Since only maximum and minimum diameters of the spheroid are symmetric in the plane of the respective mode excitation, these two extremes exhibit lower losses and thus higher quality factors, which is observable in the spectrum, t = 5 min, in the form of the higher intensities, i.e., the peaks, existing at the boundaries of the mode bands. On this basis, the bead's deformation can be determined from the spectrum at t = 5 min by fitting the two extreme positions of the different mode bands and thus to obtain minimum and maximum radii, Rₘᵢₙ and Rₘₐₓ, respectively, of the spheroid by applying $Δ R = {R}_{max} - {R}_{min} = \frac{m}{2 π {n}_{cav}} Δ {λ}_{m} = \frac{m}{2 π {n}_{cav}} \left({λ}_{m}-{λ}_{m + 1}\right)$ (5) which is derived from equation 3 for m(Rₘₐₓ) = m(Rₘᵢₙ). Mode number m and initial radius, R₀, of the non-deformed bead can be determined from the first spectrum at t = 0 min. Then, the strain εᵢₙ₋ₚₗₐₙₑ in the plain of maximum compression can be calculated to εᵢₙ₋ₚᵢₐₙₑ = (Rₘᵢₙ - R₀)/R₀, and the strain, εₒᵤₜ₋ₚₗₐₙₑ, along the main symmetry axis of the spheroid (*cf.* Fig. 4) to εₒᵤₜ₋ₚₗₐₙₑ = (Rₘₐₓ - R₀)/R₀.

In the case of a small elastic deformation, the relation between strain and stress applied can be treated by a generalized Hooke's law (cf., e.g., Keith Symon, Mechanics. Addison-Wesley, Reading, MA, 1971): $\left[\begin{matrix}{σ}_{11} \\ {σ}_{22} \\ {σ}_{33} \\ {σ}_{23} \\ {σ}_{13} \\ {σ}_{12}\end{matrix}\right] = \frac{E}{\left(1+ν\right) \left(1-2ν\right)} \left[\begin{matrix}1 - ν & ν & ν & 0 & 0 & 0 \\ ν & 1 - ν & ν & 0 & 0 & 0 \\ ν & ν & 1 - ν & 0 & 0 & 0 \\ 0 & 0 & 0 & \frac{1 - 2 ν}{2} & 0 & 0 \\ 0 & 0 & 0 & 0 & \frac{1 - 2 ν}{2} & 0 \\ 0 & 0 & 0 & 0 & 0 & \frac{1 - 2 ν}{2}\end{matrix}\right] \left[\begin{matrix}{ε}_{11} \\ {ε}_{22} \\ {ε}_{33} \\ {ε}_{23} \\ {ε}_{13} \\ {ε}_{12}\end{matrix}\right]$ (6)

Here, σ is the stress inducing the strain ε as mediated by Young's modulus E. The ratio v of out-of-plane strain (perpendicular to the applied load) to in-plane strain (in the direction of the applied load), $v = - \frac{{ε}_{out - plane}}{{ε}_{in - plane}} ,$ is called "Poisson coefficient" or "Poisson's ratio" and is a property of the respective material. It states basically that strain induced in one direction will create strain also in perpendicular direction, thereby causing a coupling of the different tensor elements.

We assume that the deformation of the bead is symmetric in the plane of the cell membrane and that it is this plane, which is related to the minimum diameter of the spheroid, i.e., εᵢₙ₋ₚₗₐₙₑ = ε₂₂ = ε_{33.} whereas the strain perpendicular to this plane is sout-piane = ε₁₁ and therefore σ₂₂ = σ₃₃ = σᵢₙ₋ₚₗₐₙₑ (stress applied by the cell onto the bead), σ₁₁ = σₒᵤₜ₋ₚₗₐₙₑ (see Fig. 4 for definition of coordinate system and in-plane/out-of-plane orientations). With these assumptions, eq. 6 can be rewritten $\begin{matrix}{σ}_{out - plane} = \frac{E}{\left(1+ν\right) \left(1-2ν\right)} \left[\left(1-ν\right){ε}_{out - plane}+2ν {ε}_{in - plane}\right] \\ {σ}_{in - plane} = \frac{E}{\left(1+ν\right) \left(1-2ν\right)} \left[{ε}_{in - plane}+ν {ε}_{out - plane}\right]\end{matrix}$ (7) to obtain the stress components σₒᵤₜ₋ₚₗₐₙₑ and σᵢₙ₋ₚₗₐₙₑ exerted by the cell onto the bead during the uptake.

Table 2 below summarizes the results of the evaluation of the spectrum at t = 5 min, including mode numbers, minimum and maximum mode positions, resulting change in radii, and their relative weight.

**Table 2**

| **Mode No. m** | λₘᵢₙ (nm) | λₘₐₓ (nm) | Δλ (nm) | ΔRᵢₙ₋ₚₗₐₙₑ (nm) | ΔR_{out-of-plane} (nm) | εᵢₙ₋ₚₗₐₙₑ | εₒᵤₜ₋ₒₗ₋ₚₗₐₙₑ |
|---|---|---|---|---|---|---|---|
| 71 | 506.37 | 508.33 | 1.955 | 11.59 | 1.66 | -0.00317 | 0.000454 |
| 72 | 502.10 | 503.94 | 1.837 | 11.93 | 1.38 | -0.00326 | 0.000378 |
| 73 | 499.39 | 501.23 | 1.840 | 11.66 | 1.58 | -0.00319 | 0.000431 |
| 74 | 495.31 | 497.07 | 1.758 | 11.85 | 1.33 | -0.00324 | 0.000364 |
| 75 | 506.37 | 494.52 | | | | | |

The non-distorted bead radius R₀ was determined to R₀ = (3654.05 ± 25.27) nm, where the error was calculated from the variation of the results for R₀ obtained from different modes. Averaging over the results for the strains as given in Table 2 yields εᵢₙ₋ₚₗₐₙₑ = (3.22 ± 0.044) x 10⁻³ and εₒᵤₜ₋ₚₗₐₙₑ = (4.07 ± 0.43) x 10⁻⁴, where the errors are the standard deviations of the statistical variation.

With these results and by utilizing equation 7, the stress exerted by the cell onto the bead can be calculated, yielding σᵢₙ₋ₚₗₐₙₑ = (-23.6 ± 0.035) MPa and σₒᵤₜ₋ₚₗₐₙₑ = (-15.0 ± 0.031) MPa, assuming an E-modulus and a Poisson coefficient for PS of E = 3.2 GPa and v = 0.345, respectively, which both are average values calculated from data found in the literature for polystyrene.

Membrane pressures of the order of some tens of MPa have been determined, for example, by molecular dynamics simulations (D. Marsh, Biophys. J. Vol. 93, pp. 3884 - 3899, 2007; J. Gullingsrud and K. Schulten, Biophys. J. Vol. 86, pp. 3496 - 3509, 2004; E. Lindahl and O. Edholm, J. Chem. Phys. Vol. 13, pp. 3882 - 3893, 2000), thus confirming our results, which are in fact the first to measure the stress exerted by an adhered live cell onto a micron-sized particle directly. Interestingly, the bead is compressed in all directions, not only in the plane of the membrane. When this result of Example 3 was included in an US provisional application No. 61/111369 on November 5, 2008, it was thought by the inventors that the result showing the compression of the bead in all directions was most probably due to the resistance of the cytoplasma to integrate such large particle and this further indicated that there must be an active mechanism present that pulls the bead inside of the cell against all resistance. However, after completion of Example 5 explained below, it is now clarified that the result of Example 3 is actually due to the limitations of the simplified approach of the mechanical model applied in Example 3 and the different model applied in Example 5 seems to be better suited for the description of the entire process, as mentioned in the above explanation of Phagocytosis.

### Example 4: Determination of the Refractive Index Inside of a Live Cell

The refractive index inside of the cell after bead internalization as detailed in Example 2 can be determined as follows. From Fig. 7, the shifts in the mode positions between the spectra at t = 0 and t = 106 nm can be determined via peak picking to Δλ_{TM} = (1.36 ± 0.07) nm for TM and Δλ_{TE} = (1.03 ± 0.04) nm for TE modes, respectively. These average shifts in the mode positions can then be related to the refractive index of the corresponding embedding medium by a reference measurement on water/glycerol mixtures of known composition and thus of known refractive indices (see, for example, Foley et al., Proc. 7th Conf. Miniat. Chem. & Biochem. Anal. Syst., Oct 5-9, 2003, Squaw Valley, CA, USA). Measuring the TM and TE mode shifts, respectively, on a bead with similar diameter to that used in Example 2 for different water/glycerol mixtures (from 5% to 40% glycerol volume fraction) gives the following linear relations in dependence of the refractive index of the bead's environment (for such measurement, see A. Francois and M. Himmelhaus, Sensors Vol. 9, pp. 6836-6852, 2009): $\begin{matrix}Δ {λ}_{TM} & = - 52.63 nm + 39.42 nm \times {n}_{med} \\ Δ {λ}_{TE} & = - 63.99 nm + 48.02 nm \times {n}_{med}\end{matrix}$ (8) Here n_{med} is the refractive index of the medium embedding the bead. By inverting eqs. 8 and inserting the mode shifts determined by evaluation of Fig. 7 as given above, we finally obtain n_{med} = 1.3668 from the TM mode shift and - in excellent agreement to this - n = 1.3689 from the TE mode shift. These values are in good agreement with the literature, which reports of intracellular refractive indices between 1.36 and 1.38 (J. Beuthan et al., Phys. Med. Biol. Vol. 41, pp. 369-382, 1996; C. L. Curl et al., Cytometry Part A Vol. 65, pp. 88-92, 2005; B. Rappaz et al., Opt. Express Vol. 13, pp. 9361-9373, 2005).

### Example 5: Simultaneous Determination of Refractive Indices and the Mechanical Stress Induced by the Cell During Bead Transmigration

In an alternate evaluation scheme it is possible to determine the parameters obtained in Examples 3 and 4 simultaneously. In this case, the evaluation of the WGM series proceeded in four steps. First, the individual WGM peaks were fitted by a number of Lorentzian profiles to determine their exact wavelength positions and widths. Subsequently, these results were used for fitting of the average bead radii and average refractive indices experienced by the sensor in the different steps of bead incorporation. Then, using the average radii and indices, in-plane and out-of-plane radii were determined and subsequently used for strain and stress calculations. The methods applied are briefly outlined in the following.

WGM fitting: To allow a numerical analysis of the spectra measured, the precise peak positions must be known. Their determination, however, is hampered by the fact that the WGM shows a significant asymmetry and broadening during the process of endocytosis, indicating a lifting of the degeneracy of the modes with respect to their polar orientation (*cf.* Fig. 4). Most importantly, besides determination of the average peak position, the shortest and longest wavelength contribution to each peak needs to be known, because this total extension of the mode allows calculation of minimum and maximum bead radii in the corresponding stage of uptake and thus comprises information about the mechanical stress exerted by the cellular cortex onto the bead. Therefore, the individual WGM of the different spectra shown in Figs. 7 and 11 were fitted by a number of Lorentzian profiles using the peak fitting module of origin 7.5Pro. The most important question to answer was then how many individual Lorentzian profiles can be reasonably distinguished within a single mode. From a theoretical viewpoint, lifting the degeneracy for a WGM with mode number m gives rise to 2 m + 1 different modes. As will be shown below, for the spectra shown in Fig. 7, m has been determined to 70, thus yielding a total of 141 individual profiles within a single peak, which seems not feasible from a practical point of view. To find a reasonable description, we therefore proceeded as follows. Some information about the bandwidth of the individual profiles within a single WGM can be obtained from the steepness of its flanks. For symmetry reasons, the profiles with lowest and highest peak position should have similar bandwidths (cf. Fig. 4). Therefore, the individual WGM within the same spectrum were fitted with an increasing number of Lorentzian profiles until the steep flanks of the bands were described well. This number was fixed for each individual spectrum and kept constant for all WGM within this spectrum.

Determination of Bead parameters: From the results obtained by peak fitting, the average refractive index and average, minimum, and maximum bead radii were determined as follows. In a first step, the average position of each mode i of a spectrum was calculated as weighed average by ${\overline{λ}}_{i} = {\sum }_{j} {c}_{j}^{i} {λ}_{j}^{i} / {\sum }_{j} {c}_{j}^{i} ,$ where ${c}_{j}^{i}$ is the amplitude of Lorentzian profile j with peak position ${λ}_{j}^{i}$ used to fit mode i. These average mode positions were then used to determine average bead radius and average refractive index of the bead's environment simultaneously by fitting of WGM Airy approximations to the average mode positions. Useful descriptions of Airy approximations for particles in a dielectric environment have been recently derived (Pang et al., Appl. Phys. Lett. Vol. 92, pp. 221108/1-3, 2008). For fitting, which was programmed in matlab R2007a, the total deviation between measured and calculated mode positions, given as $Δ = {\sum }_{i} abs \left({\overline{λ}}_{i}-λ\left(p, q, m, R, {n}_{s}, {n}_{e}\right)\right) ,$ (9) was minimized by variation of all relevant parameters, i.e., mode number, bead radius, and refractive index, until sufficient precision was reached (3 decimal places for radii, 5 decimal places for refractive indices). In eq. 9, λ refers to the mode position calculated via the Airy approximation, p is its state of polarization (p = TE or TM), q and m are WGM mode order and mode number, respectively, R is the bead radius, nₛ its refractive index (nₛ = 1.5590 for dye-doped polystyrene microbeads, for details see Francois and Himmelhaus, Sensors, Vol. 9, pp. 6836-6852, 2009), and nₑ the refractive index of the bead's environment.

Subsequently, thus determined refractive indices were kept fixed and minimum and maximum bead radii, corresponding to the main symmetry axes of the ellipsoid, were calculated from the corresponding minimum and maximum mode positions, respectively. These are the results shown in Fig. 12. The spectra in Fig. 11 were treated analogously.

The only uncertainty introduced in this procedure was that we had to decide a priori which of the WGM in a spectrum correspond to TM and which comprise TE modes. Further, we assumed that all of the modes observed are of 1^{st} order, i.e., q = 1. Both of these assumptions were made based on the literature (Zijlstra et al., Appl. Phys. Lett. Vol. 90, pp. 161101/1-3, 2007; Pang et al., Appl. Phys. Lett. Vol. 92, pp. 221108/1-3, 2008; Francois and Himmelhaus, Appl. Phys. Lett., Vol. 92, pp. 141107/1-3, 2008) and the observations made by applying the Airy approximations to different environmental refractive indices. On this basis we found that the spectra in Fig. 7 show 3 TM and 2 TE modes, the mode numbers of which have to be determined by applying the fitting procedure described above. Accordingly, eq. 9 can be rewritten as $\begin{matrix}{Δ}_{Fig .7} = abs \left({λ}_{1}-λ\left(TM,q=1,m,R,{n}_{s},{n}_{e}\right)\right) + abs \left({λ}_{2}-λ\left(TE,q=1,m,R,{n}_{s},{n}_{e}\right)\right) + abs \left({λ}_{3}-λ\left(TM,q=1,m-1,R,{n}_{s},{n}_{e}\right)\right) + abs \left({λ}_{4}-λ\left(TE,q=1,m-1,R,{n}_{s},{n}_{e}\right)\right) \\ abs \left({λ}_{5}-λ\left(TM,q=1,m-2,R,{n}_{s},{n}_{e}\right)\right)\end{matrix}$ (10) with the experimentally determined WGM positions *λᵢ* < *λ*_{*i*+1}.

Calculation of mechanical stress: As before in Example 3, Hooke's generalized law as given in eqs. 6 and 7 is applied for calculation of the mechanical stress exerted by the cell from the bead deformation. One intricacy is, owever, that eq. 7 does not account for the presence of the thin surface layer on the bead arising from the PE coating and an additional layer that adsorbed onto the PE during the stabilization phase in ECGM. Such layer is crucial because it supposedly comprises a much smaller Young's modulus and thus exhibits a larger compression during the bead uptake. In fact we found that direct application of eq. 7 for calculation of the stress components leads to negative stress in both directions, i.e., in-plane and out-of-plane (cf. results of Example 3). In such case, however, the bead would not be pulled into the cell, but the forces would move it out. This obvious contradiction to the observations is resolved when the thin adsorption layer is taken into account as we will show in the following.

Based on previous work (Francois and Himmelhaus, Appl. Phys. Lett., Vol. 92, pp. 141107/1-3, 2008) and an independent SPR study (Himmelhaus and Francois, Biosens. and Bioelectron., Vol. 25, pp. 418-427, 2009), we determined the thickness of the PE layer to (5.7 ± 0.82) nm and that arising from the growth medium to (2.3 ± 0.10) nm, yielding a total thickness of d = (8.0 ± 1.0) nm. The composition of the ECGM layer is unknown but seems to arise from proteins present in the ECGM supplement. Since proteins in question, such as serum albumin, show significantly higher Young's moduli (Ahluwalia et al., 1996. Langmuir 12, 416-422; Brownsey et al., 2003. Biophys. J. 85, 3943.3950) than the PE layer (Mermut et al., 2003. Macromolecules 36, 8819.8824), we decided to treat the adsorption layer as a single layer with the elastic properties of the PE film as a worst-case estimate.

The thickness of the soft adsorption layer is much smaller than the bead radius, i.e., d_{L} << R, so that coupling between in-plane and out-of-plane components of this layer is not expected. Therefore, we can treat the two directions independently of each other and use an isotropic Hooke's law for their stress-strain relations ${σ}_{i}^{L} = {E}_{L} {ε}_{i}^{L} and {σ}_{o}^{L} = {E}_{L} {ε}_{o}^{L} ,$ (11) where σᵢ^{L} and σₒ^{L} are the stress exerted on the layer in in-plane and out-of-plane directions, respectively, E_{L} is Young's modulus of the layer, and εᵢ^{L} and εₒ^{L} are the respective strain components. The stress experienced by bead and adsorption layer in the two principal directions must be the same, i.e., ${σ}_{i} = {σ}_{i}^{L} and {σ}_{o} = {σ}_{o}^{L} .$ (12) Further, the deformation measured by means of the WGM transducer mechanism must be interpreted as total deformation of bead and adsorption layer, i.e., $r = R + d , {r}_{i} = {R}_{i} + {d}_{i} , and {r}_{o} = {R}_{o} + {d}_{o} ,$ (13) where variables without index refer to the initial, i.e., stress-free, state prior to bead uptake, index "i" assigns the in-plane variables and index "o" out-of-plane variables, and variables rₓ refer to measured total radii, Rₓ to bead radii, and dₓ to corresponding layer thicknesses.
Finally, the in-plane and out-of-plane strain components of the bead deformation as measured by the WGM transducer principle are given as $\begin{matrix}{ε}_{i} = \frac{{R}_{i} - R}{R} , & {ε}_{i}^{L} = \frac{{d}_{i} - d}{d} \\ {ε}_{o} = \frac{{R}_{o} - R}{R} , & {ε}_{o}^{L} = \frac{{d}_{o} - d}{d}\end{matrix} ,$ (14) where the indexing is analogous to that used above. By inserting eqs. 7 and 11 into 12 and applying eqs. 13 and 14, eq. 7 can be solved for Rᵢ and Rₒ as a function of measured quantities only, i.e., R, d, and materials constants. Then, dᵢ and dₒ can be determined via eq. 13. These are the results given in the third section from top of Table 3.

The required materials constants were used as follows:
*Refractive index of polystyrene* (Francois and Himmelhaus, Sensors, Vol. 9, pp. 6836-6852, 2009): 1.5590
*Young's modulus of polystyrene* (Heim et al., , 2002. J. Adhes. Sci. Technol. 16, 829.843): 2.55 GPa
*Poisson's ratio of polystyrene* (Seitz et al., , 1993. J. Appl. Polym. Sci. 49, 1331.1351) 0.354
*Young's modulus of PE layers* (Mermut et al., 2003. Macromolecules 36, 8819.8824): (1.8 ± 1) MPa at pH 7

For a detailed error discussion, we refer to the literature (Himmelhaus and Francois, Biosens. and Bioelectron., Vol. 25, pp. 418-427, 2009).

Results: Figure 12 displays average refractive indices, bead radii (minimum, mean, maximum), and ratio of lower versus upper mode intensities as experienced by the bead during incorporation as obtained by the evaluation of the spectra of Fig. 7 according to above outlined procedure. The refractive index shows a continuous rise, indicating progressive bead engulfment, and saturates around 1.36 in good agreement with literature values for intracellular refractive indices, which are in the range of 1.36-1.38 (Curl et al., 2005. Cytometry A 65, 88.92; Rappaz et al., 2005. Opt. Express 13, 9361.9373). Only the value at 5 min is an exception from the monotone behavior, thus indicating that a second mechanism is dominant here, which is supposedly related to bead deformation. Fig. 12c plots the intensity ratios of lower to upper band positions for the spectra of Fig. 7. Obviously, the ratio is small except for the 5 min spectrum, thereby giving evidence that it is mainly influenced by bead deformation and thus mechanical forces exerted by the cell. This compression is further indicated in Fig. 12b, which displays the evolution of the bead radii. Obviously, at 5 min, the bead size is smaller than otherwise.

On basis of these observations, the stress exerted by the cell is calculated by assuming that the bead is deformed into an ellipsoid, i.e., that the stress within the plane of the membrane is uniform, σ_{I} = G₂₂ = G₃₃. This model is in concordance with the work of Herant and coworkers on the mechanics of neutrophil phagocytosis (Herant et al., 2006. J. Cell Sci. 119, 1903.1913.), which gave evidence for a central pulling force along the bead's out-of-plane axis. By applying eq. 14, the independently determined average value for the thin adsorption layer, and literature values for the material constants, in-plane and out-of-plane stress were determined. Table 3 lists the results. The errors are separated into those caused by spectra evaluation, i.e., the WGM sensor itself, and those caused by poor knowledge of thickness and composition of the organic layer.

**Table 3**

| PARAMETER | UNIT | SPECTRUM | |
|---|---|---|---|
| | | Fig. 7 - t = 5 min | Fig. 11 - t = 35 min |

| WGM fitting | | | |
|---|---|---|---|
| initial total radius r | nm | 3906.86 ± 0.25 | 5030.06 ± 0.06 |
| in-plane total radius rᵢ | nm | 3899.43 ± 0.60 | 5028.67 ± 0.07 |
| out-of-pl. total radius rₒ | nm | 3913.25 ± 0.18 | 5031.48 ± 0.07 |

| Reference measurement | | | |
|---|---|---|---|
| initial layer thickness d | nm | 8.0 ± 1.0 | |

| Calculation based on coated-sphere model | | | |
|---|---|---|---|
| initial bead radius R | nm | 3898.86 ± 1.03 (± 0.25 / ± 1.0) | 5022.06 ± 1.00 (± 0.06 / ± 1.0) |
| in-plane bead radius Rᵢ | nm | 3897.13 ± 1.13 (± 0.25 / ± 1.10) | 5021.65 ± 0.98 (± 0.05 / ± 0.98) |
| out-of-pl. bead radius Rₒ | nm | 3901.50 ± 1.60 (± 0.24 / ± 1.58) | 5022.70 ± 1.08 (± 0.05 / ± 1.07) |
| in-plane bead strain εᵢ | (1e-4) | -4.43 ± 1.88 (± 0.27 / ± 1.86) | -0.81 ± 0.32 (± 0.03 / ± 0.31) |
| out-of-pl. bead strain ε_{ο} | (1e-4) | 6.77 ± 2.65 (± 0.26 / ± 2.64) | 1.29 ± 0.47 (± 0.05 / ± 0.46) |
| in-plane layer thickness dᵢ | nm | 2.30 ± 1.23 (± 0.55 / ± 1.10) | 7.02 ± 0.98 (± 0.07 / ± 0.98) |
| out-of-pl. layer thickness dₒ | nm | 11.75 ± 1.60 (± 0.27 / ± 1.58) | 8.78 ± 1.08 (± 0.07 / ± 1.07) |
| in-plane layer strain εᵢ^{L} | (1e-1) | -7.12 ± 1.32 (± 0.69 / ± 1.13) | -1.23 ± 0.24 (± 0.09 / ± 0.22) |
| out-of-pl. layer strain ε_{ο}^{L} | (1e-1) | 4.68 ± 1.34 (± 0.34 / ± 1.29) | 0.97 ± 0.31 (± 0.09 / ± 0.29) |
| in-plane stress σᵢ = σᵢ^{L} | MPa | -1.282 ± 0.593 (± 0.123 / ± 0.580) | -0.221 ± 0.096 (± 0.017 / ± 0.094) |
| out-of-pl. stress σₒ = σ_{ο}^{L} | MPa | 0.843 ± 0.279 (± 0.062 / ± 0.272) | 0.175 ± 0.056 (± 0.016 / ± 0.054) |

The errors given in Table 3 indicate that the interference-based transducer mechanism applied achieves satisfactory accuracy despite of the subtlety of the effects and that current limitations in precision are mainly due to insufficient knowledge of the bead's coating. These latter implications, however, were not the focus of this explorative study. Furthermore, even the present results give valuable insight into the mechanism of endocytosis. Both, in-plane and out-of-plane stresses are significantly larger than what could be expected from passive cortical tension alone. Assuming a minimum membrane thickness of 5 nm (Nelson et al., 2005. Lehninger.Principles of Biochemistry, 4th ed. W. H. Freeman and Co, New York, p. 369 (Figure 11-1).), a maximum cortical tension of 1mN/m translates into a tensile stress of 200 kPa, which is clearly outside the total error of our results, thus indicating the presence of an active force. While the in-plane stress is expected to result from a superposition of passive and active components, the out-of-plane stress may be solely attributed to the pulling force. With an average diameter of 7.8 µm, the total force onto the projected bead area in out-of-plane direction amounts to 40.2 µN. This large value cannot be explained solely by the presence of surface molecular motors as postulated by Herant and coworkers (Herant et al., 2006. J. Cell Sci. 119, 1903.1913). Little is known about the density of surface molecular motors, but a reasonable upper limit - from experimental evidence (Herant et al., 2006. J. Cell Sci. 119, 1903.1913) as well as simple steric considerations - seems to be ∼1000 motors/µm² . Given a maximum force per motor (Micoulet et al., 2005. Chem. Phys. Chem. 6, 663.670) of 1 pN this results in 95 nN total force. Therefore, either our stress estimates are false by an unlikely factor of ∼420 or another way of force generation is present. An error discussion has been given above. As alternative mechanism we conceive that a major part of the cytoskeleton in vicinity of the bead, which comprises a dense network of different kinds of filaments and molecular motors, acts on the bead as a whole. While the details of such "global" cortex action need further clarification, we can at least estimate whether such large force is in general compliance with the cell's power balance. The 7.8 µm bead studied is moved by the cell within 106 min from the outside to the inside for a distance of ∼10 µm. Thus, the work performed by the cell amounts to ∼400 pJ, the power consumption to ∼63 fW, resulting in a consumption rate of 1.6 x 10⁶ ATP/s (Micoulet et al., 2005. Chem. Phys. Chem. 6, 663.670). The total ATP production rate within a cell is about 10¹⁰ ATP/s (Micoulet et al., 2005. Chem. Phys. Chem. 6, 663.670), so that the internalization of the bead requires only a small fraction of 0.016% of the cell's power balance.

Further evidence for a global cortex action can be gained from the spectra of Fig. 11, which show a bead of 10.1 µm diameter in contact with a HUVEC. In this case, the bead is too large for endocytosis. After an initial peak shift indicating that the bead has approached the cell, mode broadening is observable similar to that of Fig. 7 (Please note that due to the smaller free spectral range of a larger bead, i.e., a smaller mode spacing, the observed spectral shifts are smaller for same changes in the beads' environment). However, this time it continues to remain for over 30 min. Then, the cell seems to release the bead as evident from the WGMs' blue shift towards to their initial values. The stress calculation gives an 5-6-fold smaller stress compared with the first bead (Table 1). This is counterintuitive if the force arises solely from surface-bound molecular machinery, since a larger bead bears more surface area. For a force exerted by the entire cortex, however, it is reasonable that a bead, which penetrates to lesser extent into the cortex, experiences a smaller force, i.e., the cortex cannot fully grab the bead. This might be understood as a kind of "pincer movement" of simultaneous pulling and squeezing, since both in-plane and out-of-plane stress components are of similar magnitude within a difference roughly of the order of the maximum passive stress component of some hundreds of kPa. Such combined action of the cortical apparatus appears not implausible, since the cell might try to reduce the bead diameter to minimize its efforts.

The simpler evaluation scheme applied in Examples 3 and 4 yields good agreement for the intracellular refractive indices, which is found in both Examples 4 and 5 to be around 1.36. In contrast to this good agreement, the calculation of the mechanical stress as given in Example 3 deviates clearly from those values obtained here. The main reason for this discrepancy is most likely that in Example 3, the mechanical properties of the thin adsorption layer that has formed on the surface of the bead were not taken into account.

Additional advantages and modifications will readily occur to those skilled in the art. Therefore, the invention in its broader aspects is not limited to the specific details and representative embodiments shown and described herein. Accordingly, various modifications may be made without departing from the scope of the general inventive concept as defined by the appended claims.

## Claims

1. A method for sensing a biochemical and/or biomechanical process of a live biological cell (13) in vitro, comprising the steps of:
disposing at least a part of a microresonator (1) into the live biological cell (13); and
during or after disposing the part of the microresonator into the live biological cell (13), sensing the process of the live biological cell (13) by analysis of one or more optical cavity modes of the microresonator.

2. The method for sensing a biochemical and/or biomechanical process according to claim 1, wherein
the cell (13) is observed by determining whether the optical cavity mode used for analysis of the process of the cell (13) is symmetrical or asymmetric.

3. The method for sensing a biochemical and/or biomechanical process according to claim 1, wherein
the excitation of one or more optical cavity modes applies fluorescent material.

4. The method for sensing a biochemical and/or biomechanical process according to claim 3, wherein
the fluorescent material is applied to the microresonator (1) and/or the live biological cell (13) before, during, or after disposing at least a part of the microresonator (1) into the live biological cell (13).

5. The method for sensing a biochemical and/or biomechanical process according to claim 1, wherein
a plurality of the microresonators (1) is disposed into the live biological cell (13).

6. The method for sensing a biochemical and/or biomechanical process according to claim 5, wherein
at least one of the microresonators (1) is different from the other of the microresonators (1) with respect to size, shape, core and optional shell materials (2), fluorescence excitation and/or emission regimes, and/or biochemical coatings (16) thereof.

7. The method for sensing a biochemical and/or biomechanical process according to claim 5, wherein
a plurality of the microresonators (1) forms a cluster.

8. The method for sensing a biochemical and/or biomechanical process according to claim 1, wherein
an optically-induced event is initiated before, during, or after sensing the process of the live biological cell (13).

## Patentansprüche

1. Ein Verfahren zur Erfassung eines biochemischen und/oder biomechanischen Prozesses einer lebenden biologischen Zelle (13) in-vitro, die folgenden Schritte beinhaltend:
Platzieren zumindest eines Teils eines Mikroresonators (1) in die lebende biologische Zelle (13); und
während oder nach dem Platzieren des Teils des Mikroresonators (1) in die lebende biologische Zelle (13) Erfassen des Prozesses der lebenden biologischen Zelle (13) durch Analyse einer oder mehrerer optischer Resonatormoden des Mikroresonators.

2. Das Verfahren zur Erfassung eines biochemischen und/oder biomechanischen Prozesses nach Anspruch 1, wobei
die Zelle (13) beobachtet wird durch Bestimmung, ob die optische Resonatormode, die zur Analyse des Prozesses der Zelle (13) benutzt wird, symmetrisch oder asymmetrisch ist.

3. Das Verfahren zur Erfassung eines biochemischen und/oder biomechanischen Prozesses nach Anspruch 1, wobei
die Anregung einer oder mehrerer optischer Resonatormoden fluoreszentes Material anwendet.

4. Das Verfahren zur Erfassung eines biochemischen und/oder biomechanischen Prozesses nach Anspruch 3, wobei
das fluoreszente Material auf den Mikroresonator (1) und/oder die lebende biologische Zelle (13) angewendet wird bevor, während, oder nach dem Platzieren zumindest eines Teils des Mikroresonators (1) in die lebende biologische Zelle (13).

5. Das Verfahren zur Erfassung eines biochemischen und/oder biomechanischen Prozesses nach Anspruch 1, wobei
eine Vielzahl von Mikroresonatoren (1) in die lebende biologische Zelle (13) eingebracht wird.

6. Das Verfahren zur Erfassung eines biochemischen und/oder biomechanischen Prozesses nach Anspruch 5, wobei
zumindest einer der Mikroresonatoren (1) von den anderen Mikroresonatoren (1) bezüglich Größe, Form, Kern und optionaler Hüllenmaterialien (2), Fluoreszenzanregungs- und/oder -emissionseigenschaften und/oder biochemischer Beschichtungen (16) hiervon verschieden ist.

7. Das Verfahren zur Erfassung eines biochemischen und/oder biomechanischen Prozesses nach Anspruch 5, wobei
eine Vielzahl der Mikroresonatoren (1) einen Cluster bildet.

8. Das Verfahren zur Erfassung eines biochemischen und/oder biomechanischen Prozesses nach Anspruch 1, wobei
ein optisch induziertes Ereignis vor, während oder nach Erfassen des Prozesses der lebenden biologischen Zelle (13) induziert wird.

## Revendications

1. Une méthode pour détecter un processus biochimique et/ou biomécanique d'une cellule biologique vivante (13) in-vitro, comprenant les étapes suivantes :
placer au moins une partie d'un micro-résonateur (1) dans la cellule biologique vivante (13); et
durant ou après avoir placé une partie d'un micro-résonateur (1) dans la cellule biologique vivante (13), mesurer le processus de la cellule biologique vivante (13) en analysant un ou plusieurs modes de cavité optique du micro-résonateur.

2. La méthode pour détecter un processus biochimique et/ou biomécanique selon la revendication 1, où
la cellule (13) est observée en déterminant si le mode de cavité optique utilisé pour l'analyse du processus de la cellule (13) est symétrique ou asymétrique.

3. La méthode pour détecter un processus biochimique et/ou biomécanique selon la revendication 1, où
l'excitation d'un ou plusieurs modes de cavité optique du micro-résonateur est générée par un matériau fluorescent.

4. La méthode pour détecter un processus biochimique et/ou biomécanique selon la revendication 3, où
le matériau fluorescent est appliqué au micro-résonateur (1) et/ou à la cellule biologique vivante (13) avant, durant ou après avoir placé au moins une partie d'un micro-résonateur (1) dans la cellule biologique vivante (13).

5. La méthode pour détecter un processus biochimique et/ou biomécanique selon la revendication 1, où
une pluralité de micro-résonateurs (1) sont placés dans la cellule biologique vivante (13).

6. La méthode pour détecter un processus biochimique et/ou biomécanique selon la revendication 5, où
au moins un micro-résonateur (1) est différent des autres micro-résonateurs (1) de par sa taille, sa forme, son cœur et ses matériaux de couche optionnels (2), ses régimes d'excitation et/ou de fluorescence, et/ou ses revêtement biochimiques (16).

7. La méthode pour détecter un processus biochimique et/ou biomécanique selon la revendication 5, où
une pluralité de micro-résonateurs (1) forment un agrégat.

8. La méthode pour détecter un processus biochimique et/ou biomécanique selon la revendication 1, où
un effet optiquement induit est initié avant, pendant ou après la détection du processus de la cellule biologique vivante (13).
